(19) **Europäisches Patentamt**
**European Patent Office**
**Office européen des brevets**

(11) **EP 4 513 807 A1**

(12) **EUROPEAN PATENT APPLICATION**
published in accordance with Art. 153(4) EPC

(43) Date of publication:
**26.02.2025 Bulletin 2025/09**

(21) Application number: **23790998.1**

(22) Date of filing: **29.03.2023**

(51) International Patent Classification (IPC):
*H04L 5/00* (2006.01)

(52) Cooperative Patent Classification (CPC):
**H04L 5/00**

(86) International application number:
**PCT/CN2023/084839**

(87) International publication number:
**WO 2023/202338 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.04.2022 CN 202210425886**

(71) Applicant: **Datang Mobile Communications Equipment Co., Ltd.**
**Beijing 100085 (CN)**

(72) Inventors:
• **LU, Yiwen**
**Beijing 100085 (CN)**
• **GAO, Qiubin**
**Beijing 100085 (CN)**

(74) Representative: **Studio Torta S.p.A.**
**Via Viotti, 9**
**10121 Torino (IT)**

(54) **INFORMATION TRANSMISSION METHOD AND APPARATUS, TERMINAL, NETWORK SIDE DEVICE AND MEDIUM**

(57) An information transmission method and apparatus, a terminal, a network side device, and a medium are provided, which solve the problem of channel transmission performance degradation caused by channel time variability and CSI expiration caused by Doppler in the prior art. The method includes: receiving configuration information of a first CSI-RS used for time-frequency tracking sent by the network side device, and a first CSI reporting setting information used for indicating a reporting quantity in the CSI reported by the terminal, wherein a first reporting quantity includes delay information and/or Doppler information; receiving the first CSI-RS based on a first CSI resource setting information; sending the CSI to the network side device based on the first CSI reporting setting information, wherein the CSI includes K1 pieces of delay information and/or K2 pieces of Doppler information.

**Fig. 3**

start

receiving at least one CSI resource setting information and at least one CSI reporting setting information sent by a network side device, wherein the at least one CSI resource setting information includes first CSI resource setting information, the first CSI resource setting information includes configuration information of a first CSI-RS used for time-frequency tracking; at least one CSI reporting setting information includes first CSI reporting setting information, the first CSI reporting setting information is used to indicate a first reporting quantity in CSI reported by the terminal, the first reporting quantity includes delay information and/or Doppler information — 301

receiving a first CSI-RS based on first CSI resource setting information — 302

sending CSI to the network side device based on the first CSI reporting setting information, the CSI including K1 pieces of delay information and/or K2 pieces of Doppler information, where K1 and K2 are each a positive integer greater than or equal to 1 — 303

end

**EP 4 513 807 A1**

**Description**

**CROSS REFERENCE TO RELATED APPLICATIONS**

The present application claims a priority to the Chinese patent application No. 202210425886.9 filed in China on April 21, 2022, a disclosure of which is incorporated herein by reference in its entirety.

**TECHNICAL FIELD**

The present disclosure relates to the field of communication technology, and in particular, to an information transmission method and apparatus, a terminal, a network side device and a medium.

**BACKGROUND**

To avoid multiple types and subtypes of feedback configurations, a unified Channel State Information (CSI) feedback framework is adopted in the New Radio (NR) system, which can support various application scenarios.
In the current NR system, channel transmission performance of a terminal in medium-speed and high-speed scenarios is significantly degraded. This is because the base station cannot estimate time-varying Doppler information or delay information of the current channel transmission through the CSI reported by the terminal. If the base station cannot predict an accurate channel change within a certain period based on a current CSI, the precoding calculated based on the current CSI report cannot match the actual channel at each moment, resulting in a significant reduction in channel transmission performance. In the current NR system, the performance degradation is primarily caused by channel time variability and CSI expiration caused by Doppler.

**SUMMARY**

An object of the present disclosure is to provide an information transmission method and apparatus, a terminal, a network side device, and a medium, to solve the problem of channel transmission performance degradation caused by channel time variability and CSI expiration caused by Doppler in related art.
To achieve the above object, an embodiment of the present disclosure provides an information transmission method, which is performed by a terminal, including:

receiving at least one Channel State Information (CSI) resource setting information and at least one CSI reporting setting information sent by a network side device, wherein the at least one CSI resource setting information includes first CSI resource setting information, the first CSI resource setting information includes configuration information of a first CSI-Reference Signal (CSI-RS) used for time-frequency tracking; the at least one CSI reporting setting information includes first CSI reporting setting information, the first CSI reporting setting information is used to indicate a first reporting quantity in CSI reported by the terminal, the first reporting quantity includes delay information and/or Doppler information;
receiving the first CSI-RS based on the first CSI resource setting information;
sending CSI to the network side device based on the first CSI reporting setting information, the CSI including K1 pieces of delay information and/or K2 pieces of Doppler information, where K1 and K2 are each a positive integer greater than or equal to 1.

Optionally, the first CSI resource setting information includes S resource sets, each of the resource sets includes Y pieces of configuration information of the first CSI-RS, where S is a positive integer greater than or equal to 1, and Y is a positive integer greater than or equal to 1;
the first CSI resource setting information is associated with the first CSI reporting setting information.
Optionally, the first CSI resource setting information further includes configuration information of a second CSI-RS used for channel measurement;

wherein the first CSI resource setting information is associated with the first CSI reporting setting information, and the first reporting quantity further includes a preset candidate configuration parameter; or
the at least one CSI reporting setting information further includes second CSI reporting setting information, the first CSI resource setting information is associated with the first CSI reporting setting information and the second CSI reporting setting information, the second CSI reporting setting information is used to indicate a second reporting quantity in the CSI reported by the terminal, and the second reporting quantity includes a preset candidate configuration parameter.

Optionally, the first CSI resource setting information includes P resource sets, each of the resource sets includes X pieces of configuration information of the second CSI-RS and Z pieces of configuration information of the first CSI-RS, where P, X, and Z are each a positive integer greater than or equal to 1; or
the first CSI resource setting information includes Q resource sets, wherein each of Q1 resource sets includes E pieces of configuration information of the second CSI-RS, and each of Q2 resource sets includes F pieces of configuration information of the first CSI-RS, where Q is a positive integer greater than or equal to 2, Q = Q1 + Q2, where Q1, Q2, E, and F are each a positive integer greater than or equal to 1.

Optionally, in the case that the first CSI resource setting information includes Q resource sets, the method further includes:
receiving first pairing signaling sent by the network side device, the first pairing signaling is used to indicate two associated paired resource sets, wherein a first one of the associated paired resource sets is indicated to be used for the channel measurement, and a second one of the associated paired resource sets is indicated to be used for the time-frequency tracking.

Optionally, the at least one CSI resource setting information further includes second CSI resource setting information, and the second CSI resource setting information includes configuration information of the second CSI-RS used for channel measurement;

wherein the second CSI resource setting information and the first CSI resource setting information are associated with the first CSI reporting setting information, and the first reporting quantity further includes a preset candidate configuration parameter; or
the at least one CSI reporting setting information further includes second CSI reporting setting information, the second CSI resource setting information is associated with the second CSI reporting setting information, the first CSI resource setting information is associated with the first CSI reporting setting information, and the second CSI reporting setting information includes the second reporting quantity used for instructing the terminal to report the CSI, and the second reporting quantity includes the preset candidate configuration parameter.

Optionally, the method further includes:
receiving second pairing signaling sent by the network side device, wherein the second pairing signaling is used to indicate two associated paired resource sets, the two associated paired resource sets are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.

Optionally, sending the CSI to the network side device includes at least one of the following steps:

sending K1 pieces of quantized delay information to the network side device through a preset first quantization mode; or
sending K2 pieces of quantized Doppler information to the network side device through a preset second quantization mode.

Optionally, sending the CSI to the network side device includes:

when the first reporting quantity includes delay information and K1=1, sending the delay information of a strongest delay path to the network side device;
when the first reporting quantity includes delay information and K1 > 1, sending the delay information of K1 delay paths to the network side device according to a first preset priority rule;
when the first reporting quantity includes Doppler information and K2 = 1, sending the Doppler information of the strongest delay path to the network side device;
when the first reporting quantity includes Doppler information and K2 > 1, sending the Doppler information of K2 delay paths to the network side device according to a second preset priority rule.

Optionally, when the preset candidate configuration parameter includes a Precoding Matrix Indicator (PMI), and the number M of frequency-domain basis vectors in the PMI is less than K1, first M pieces of delay information in the K1 pieces of delay information are non-zero, and $(M+1)^{th}$ delay information to $K1^{th}$ delay information are zero;
when the preset candidate configuration parameter includes the PMI, and the number M of frequency-domain basis vectors in the PMI is less than K2, first M pieces of Doppler information in the K2 pieces of Doppler information are non-zero, and $(M+1)^{th}$ Doppler information to K2th Doppler information are zero.

Optionally, when the first reporting quantity includes the Doppler information, the Doppler information includes at least one of the followings:

first Doppler information, wherein the first Doppler information is Doppler frequency shift;

second Doppler information, wherein the second Doppler information represents a first Doppler variation caused by acceleration of relative motion between the terminal and the network side device; or

third Doppler information, wherein the third Doppler information represents a second Doppler variation between a current report and a previous report.

Optionally, when the first reporting quantity includes the second Doppler information, the first CSI reporting setting information further includes a first threshold value;

before sending the CSI to the network side device, the method further includes:

when the first Doppler variation in a measurement result obtained by measuring the received first CSI-RS is less than the first threshold value, setting as null a field corresponding to the second Doppler information in the CSI to be sent;

when the first Doppler variation in the measurement result obtained by measuring the received first CSI-RS is greater than or equal to the first threshold value, setting as the first Doppler variation the field corresponding to the second Doppler information in the CSI to be sent.

Optionally, when the first reporting quantity includes the third Doppler information, the first CSI reporting setting information further includes a second threshold value;

before sending the CSI to the network side device, the method further includes:

when the second Doppler variation in a measurement result obtained by measuring the received first CSI-RS is less than the second threshold value, setting as null a field corresponding to target Doppler information in the CSI to be sent;

when the second Doppler variation in the measurement result obtained by measuring the received first CSI-RS is greater than or equal to the second threshold value, setting as the target Doppler information the field corresponding to the target Doppler information in the CSI to be sent, wherein the target Doppler information is the first Doppler information, the second Doppler information, or the third Doppler information.

Optionally, when the first reporting quantity includes the Doppler information, and the Doppler information is Doppler frequency shift, the CSI includes the Doppler frequency shift corresponding to a first delay path and a Doppler frequency shift difference between each of the delay paths in subsequent K2-1 delay paths and the first delay path;

when the first reporting quantity includes delay information, and the delay information is an absolute delay value of the delay path, the CSI includes the absolute delay value of the first delay path and a difference between the absolute delay value of each of the delay paths in the subsequent K1-1 delay paths and the absolute delay value of the first delay path.

To achieve the above object, an embodiment of the present disclosure also provides an information transmission method, which is performed by a network side device, including:

sending at least one Channel State Information (CSI) resource setting information to a terminal, wherein the at least one CSI resource setting information includes first CSI resource setting information, the first CSI resource setting information includes configuration information of a first CSI-Reference Signal (CSI-RS) used for time-frequency tracking;

sending at least one CSI reporting setting information to the terminal, wherein the at least one CSI reporting setting information includes first CSI reporting setting information, the first CSI reporting setting information is used to indicate a first reporting quantity in CSI reported by the terminal, and the first reporting quantity includes delay information and/or Doppler information.

Optionally, the first CSI resource setting information includes S resource sets, each of the resource sets includes Y pieces of configuration information of the first CSI-RS, where S is a positive integer greater than or equal to 1, and Y is a positive integer greater than or equal to 1;

the first CSI resource setting information is associated with the first CSI reporting setting information.

Optionally, the first CSI resource setting information further includes configuration information of a second CSI-RS used for channel measurement;

wherein the first CSI resource setting information is associated with the first CSI reporting setting information, and the first reporting quantity further includes a preset candidate configuration parameter; or

the at least one CSI reporting setting information further includes second CSI reporting setting information, the first CSI resource setting information is associated with the first CSI reporting setting information and the second CSI reporting setting information, the second CSI reporting setting information is used to indicate a second reporting quantity in the CSI reported by the terminal, and the second reporting quantity includes a preset candidate configuration parameter.

Optionally, the first CSI resource setting information includes P resource sets, each of the resource sets includes X pieces of configuration information of the second CSI-RS and Z pieces of configuration information of the first CSI-RS, where P, X, and Z are each a positive integer greater than or equal to 1; or

the first CSI resource setting information includes Q resource sets, wherein each of Q1 resource sets includes E pieces of configuration information of the second CSI-RS, and each of Q2 resource sets includes F pieces of configuration information of the first CSI-RS, where Q is a positive integer greater than or equal to 2, Q = Q1 + Q2, where Q1, Q2, E, and F are each a positive integer greater than or equal to 1.

Optionally, in the case that the first CSI resource setting information includes Q resource sets, the method further includes:

sending first pairing signaling to the terminal, the first pairing signaling is used to indicate two associated paired resource sets, wherein a first one of the associated paired resource sets is indicated to be used for the channel measurement, and a second one of the associated paired resource sets is indicated to be used for the time-frequency tracking.

Optionally, the at least one CSI resource setting information further includes second CSI resource setting information, and the second CSI resource setting information includes configuration information of the second CSI-RS used for channel measurement;

wherein the second CSI resource setting information and the first CSI resource setting information are associated with the first CSI reporting setting information, and the first reporting quantity further includes a preset candidate configuration parameter; or

the at least one CSI reporting setting information further includes second CSI reporting setting information, the second CSI resource setting information is associated with the second CSI reporting setting information, the first CSI resource setting information is associated with the first CSI reporting setting information, and the second CSI reporting setting information includes the second reporting quantity used for instructing the terminal to report the CSI, and the second reporting quantity includes the preset candidate configuration parameter.

Optionally, the method further includes:

sending second pairing signaling to the terminal, wherein the second pairing signaling is used to indicate two associated paired resource sets, the two associated paired resource sets are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.

To achieve the above object, the embodiment of the present disclosure also provides a terminal, including a memory, a transceiver, and a processor; wherein the memory is configured to store a computer program; the transceiver is configured to receive and send data under the control of the processor; the processor is configured to read the computer program in the memory and perform the following operations:

receiving at least one Channel State Information (CSI) resource setting information and at least one CSI reporting setting information sent by a network side device, wherein the at least one CSI resource setting information includes first CSI resource setting information, the first CSI resource setting information includes configuration information of a first CSI-Reference Signal (CSI-RS) used for time-frequency tracking; the at least one CSI reporting setting information includes first CSI reporting setting information, the first CSI reporting setting information is used to indicate a first reporting quantity in CSI reported by the terminal, the first reporting quantity includes delay information and/or Doppler information;

receiving the first CSI-RS based on the first CSI resource setting information;

sending the CSI to the network side device based on the first CSI reporting setting information, the CSI including K1 pieces of delay information and/or K2 pieces of Doppler information, where K1 and K2 are each a positive integer greater than or equal to 1.

Optionally, the first CSI resource setting information includes S resource sets, each of the resource sets includes Y pieces of configuration information of the first CSI-RS, where S is a positive integer greater than or equal to 1, and Y is a positive integer greater than or equal to 1;

the first CSI resource setting information is associated with the first CSI reporting setting information.

Optionally, the first CSI resource setting information further includes configuration information of a second CSI-RS used for channel measurement;

wherein the first CSI resource setting information is associated with the first CSI reporting setting information, and the first reporting quantity further includes a preset candidate configuration parameter; or

the at least one CSI reporting setting information further includes second CSI reporting setting information, the first CSI resource setting information is associated with the first CSI reporting setting information and the second CSI reporting setting information, the second CSI reporting setting information is used to indicate a second reporting quantity in the CSI reported by the terminal, and the second reporting quantity includes the preset candidate configuration parameter.

Optionally, the first CSI resource setting information includes P resource sets, each of the resource sets includes X pieces of configuration information of the second CSI-RS and Z pieces of configuration information of the first CSI-RS, where P, X, and Z are each a positive integer greater than or equal to 1; or

the first CSI resource setting information includes Q resource sets, wherein each of Q1 resource sets includes E pieces of configuration information of the second CSI-RS, and each of Q2 resource sets includes F pieces of configuration information of the first CSI-RS, where Q is a positive integer greater than or equal to 2, Q = Q1 + Q2, where Q1, Q2, E, and F are each a positive integer greater than or equal to 1.

Optionally, the transceiver is further configured to:

receive first pairing signaling sent by the network side device in the case that the first CSI resource setting information includes Q resource sets, the first pairing signaling is used to indicate two associated paired resource sets, wherein a first one of the associated paired resource sets is indicated to be used for the channel measurement, and a second one of the associated paired resource sets is indicated to be used for the time-frequency tracking.

Optionally, the at least one CSI resource setting information further includes second CSI resource setting information, and the second CSI resource setting information includes configuration information of the second CSI-RS used for channel measurement;

wherein the second CSI resource setting information and the first CSI resource setting information are associated with the first CSI reporting setting information, and the first reporting quantity further includes a preset candidate configuration parameter; or

the at least one CSI reporting setting information further includes second CSI reporting setting information, the second CSI resource setting information is associated with the second CSI reporting setting information, the first CSI resource setting information is associated with the first CSI reporting setting information, and the second CSI reporting setting information includes the second reporting quantity used for instructing the terminal to report the CSI, and the second reporting quantity including the preset candidate configuration parameter.

Optionally, the transceiver is further configured to:

receive second pairing signaling sent by the network side device, wherein the second pairing signaling is used to indicate two associated paired resource sets that are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.

Optionally, the transceiver is further configured to:

send K1 pieces of quantized delay information to the network side device through a preset first quantization mode; and/or

send K2 pieces of quantized Doppler information to the network side device through a preset second quantization mode.

Optionally, the transceiver is further configured to:

when the first reporting quantity includes delay information and K1=1, send the delay information of a strongest delay path to the network side device;

when the first reporting quantity includes delay information and K1 > 1, send the delay information of K1 delay paths to the network side device according to a first preset priority rule;

when the first reporting quantity includes Doppler information and K2 = 1, send the Doppler information of the strongest delay path to the network side device;

when the first reporting quantity includes Doppler information and K2 > 1, send the Doppler information of K2 delay paths to the network side device according to a second preset priority rule.

Optionally, when the preset candidate configuration parameter includes a Precoding Matrix Indicator (PMI), and the number M of frequency-domain basis vectors in the PMI is less than K1, first M pieces of delay information in the K1 pieces of delay information are non-zero, and $(M+1)^{th}$ delay information to $K1^{th}$ delay information are zero;

when the preset candidate configuration parameter includes the PMI, and the number M of frequency-domain basis vectors in the PMI is less than K2, first M pieces of Doppler information in the K2 pieces of Doppler information are non-zero, and $(M+1)^{th}$ Doppler information to K2th Doppler information are zero.

Optionally, when the first reporting quantity includes the Doppler information, the Doppler information includes at least one of the followings:

first Doppler information, wherein the first Doppler information is Doppler frequency shift;

second Doppler information, wherein the second Doppler information represents a first Doppler variation caused by acceleration of relative motion between the terminal and the network side device; or

third Doppler information, wherein the third Doppler information represents a second Doppler variation between a current report and a previous report.

Optionally, when the first reporting quantity includes the second Doppler information, the first CSI reporting setting information further includes a first threshold value;

the processor is further configured to:

when the first Doppler variation in a measurement result obtained by measuring the received first CSI-RS is less than the first threshold value, set as null a field corresponding to the second Doppler information in the CSI to be sent;

when the first Doppler variation in the measurement result obtained by measuring the received first CSI-RS is greater than or equal to the first threshold value, set as the first Doppler variation the field corresponding to the second Doppler information in the CSI to be sent.

Optionally, when the first reporting quantity includes the third Doppler information, the first CSI reporting setting information further includes a second threshold value;

the processor is further configured to:

when the second Doppler variation in a measurement result obtained by measuring the received first CSI-RS is less than the second threshold value, set as null a field corresponding to target Doppler information in the CSI to be sent;

when the second Doppler variation in the measurement result obtained by measuring the received first CSI-RS is greater than or equal to the second threshold value, set as the target Doppler information the field corresponding to the target Doppler information in the CSI to be sent, wherein the target Doppler information is the first Doppler information, the second Doppler information, or the third Doppler information.

Optionally, when the first reporting quantity includes the Doppler information, and the Doppler information is Doppler frequency shift, the CSI includes the Doppler frequency shift corresponding to a first delay path and a Doppler frequency shift difference between each of the delay paths in subsequent K2-1 delay paths and the first delay path;

when the first reporting quantity includes delay information and the delay information is an absolute delay value of the delay path, the CSI includes the absolute delay value of the first delay path and a difference between the absolute delay value of each of the delay paths in the subsequent K1-1 delay paths and the absolute delay value of the first delay path.

To achieve the above object, an embodiment of the present disclosure also provides an information transmission apparatus, including:

a first receiving unit, configured to receive at least one Channel State Information (CSI) resource setting information and at least one CSI reporting setting information sent by a network side device, wherein the at least one CSI resource setting information includes first CSI resource setting information, the first CSI resource setting information includes configuration information of a first CSI-Reference Signal (CSI-RS) used for time-frequency tracking; the at least one CSI reporting setting information includes first CSI reporting setting information, the first CSI reporting setting information is used to indicate a first reporting quantity in CSI reported by the terminal, the first reporting quantity includes delay information and/or Doppler information;

a second receiving unit, configured to receive the first CSI-RS based on the first CSI resource setting information;

a first sending unit, configured to send the CSI to the network side device based on the first CSI reporting setting information, the CSI including K1 pieces of delay information and/or K2 pieces of Doppler information, where K1 and K2 are each a positive integer greater than or equal to 1.

Optionally, the first CSI resource setting information includes S resource sets, each of the resource sets includes Y pieces of configuration information of the first CSI-RS, where S is a positive integer greater than or equal to 1, and Y is a positive integer greater than or equal to 1;
the first CSI resource setting information is associated with the first CSI reporting setting information.

Optionally, the first CSI resource setting information further includes configuration information of a second CSI-RS used for channel measurement;

wherein the first CSI resource setting information is associated with the first CSI reporting setting information, and the first reporting quantity further includes a preset candidate configuration parameter; or
the at least one CSI reporting setting information further includes second CSI reporting setting information, the first CSI resource setting information is associated with the first CSI reporting setting information and the second CSI reporting setting information, the second CSI reporting setting information is used to indicate a second reporting quantity in the CSI reported by the terminal, and the second reporting quantity includes the preset candidate configuration parameter.

Optionally, the first CSI resource setting information includes P resource sets, each of the resource sets includes X pieces of configuration information of the second CSI-RS and Z pieces of configuration information of the first CSI-RS, where P, X, and Z are each a positive integer greater than or equal to 1; or
the first CSI resource setting information includes Q resource sets, wherein each of Q1 resource sets includes E pieces of configuration information of the second CSI-RS, and each of Q2 resource sets includes F pieces of configuration information of the first CSI-RS, where Q is a positive integer greater than or equal to 2, Q = Q1 + Q2, where Q1, Q2, E, and F are each a positive integer greater than or equal to 1.

Optionally, in the case that the first CSI resource setting information includes Q resource sets, the apparatus further includes:
a third receiving unit, configured to receive first pairing signaling sent by the network side device, wherein the first pairing signaling is used to indicate two associated paired resource sets, wherein a first one of the associated paired resource sets is indicated to be used for the channel measurement, and a second one of the associated paired resource sets is indicated to be used for the time-frequency tracking.

Optionally, the at least one CSI resource setting information further includes second CSI resource setting information, and the second CSI resource setting information includes configuration information of the second CSI-RS used for channel measurement;

wherein the second CSI resource setting information and the first CSI resource setting information are associated with the first CSI reporting setting information, and the first reporting quantity further includes a preset candidate configuration parameter; or
the at least one CSI reporting setting information further includes second CSI reporting setting information, the second CSI resource setting information is associated with the second CSI reporting setting information, the first CSI resource setting information is associated with the first CSI reporting setting information, and the second CSI reporting setting information includes the second reporting quantity used for instructing the terminal to report the CSI, and the second reporting quantity including the preset candidate configuration parameter.

Optionally, the apparatus further includes:
a fourth receiving unit, configured to receive second pairing signaling sent by the network side device, wherein the second pairing signaling is used to indicate two associated paired resource sets, the two associated paired resource sets are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.

Optionally, the first sending unit is specifically configured for at least one of the followings:

sending K1 pieces of quantized delay information to the network side device through a preset first quantization mode; or
sending K2 pieces of quantized Doppler information to the network side device through a preset second quantization mode.

Optionally, the first sending unit is specifically configured to:

when the first reporting quantity includes delay information and K1=1, send the delay information of a strongest delay path to the network side device;
when the first reporting quantity includes delay information and K1 > 1, send the delay information of K1 delay paths to the network side device according to a first preset priority rule;

when the first reporting quantity includes Doppler information and K2 = 1, send the Doppler information of the strongest delay path to the network side device;

when the first reporting quantity includes Doppler information and K2 > 1, send the Doppler information of K2 delay paths to the network side device according to a second preset priority rule.

Optionally, when the preset candidate configuration parameter includes a Precoding Matrix Indicator (PMI), and the number M of frequency-domain basis vectors in the PMI is less than K1, first M pieces of delay information in the K1 pieces of delay information are non-zero, and $(M+1)^{th}$ delay information to $K1^{th}$ delay information are zero;

when the preset candidate configuration parameter includes the PMI, and the number M of frequency-domain basis vectors in the PMI is less than K2, first M pieces of Doppler information in the K2 pieces of Doppler information are non-zero, and $(M+1)^{th}$ Doppler information to K2th Doppler information are zero.

Optionally, when the first reporting quantity includes the Doppler information, the Doppler information includes at least one of the followings:

first Doppler information, wherein the first Doppler information is Doppler frequency shift;

second Doppler information, wherein the second Doppler information represents a first Doppler variation caused by acceleration of relative motion between the terminal and the network side device; or

third Doppler information, wherein the third Doppler information represents a second Doppler variation between a current report and a previous report.

Optionally, when the first reporting quantity includes the second Doppler information, the first CSI reporting setting information further includes a first threshold value; the apparatus further includes:

a first processing unit, configured to set as null a field corresponding to the second Doppler information in the CSI to be sent in the case that the first Doppler variation in a measurement result obtained by measuring the received first CSI-RS is less than the first threshold value;

a second processing unit, configured to set as the first Doppler variation the field corresponding to the second Doppler information in the CSI to be sent in the case that the first Doppler variation in the measurement result obtained by measuring the received first CSI-RS is greater than or equal to the first threshold value.

Optionally, when the first reporting quantity includes the third Doppler information, the first CSI reporting setting information further includes a second threshold value; the apparatus further includes:

a third processing unit, configured to set as null a field corresponding to target Doppler information in the CSI to be sent in the case that the second Doppler variation in a measurement result obtained by measuring the received first CSI-RS is less than the second threshold value;

a fourth processing unit, configured to set as the target Doppler information the field corresponding to the target Doppler information in the CSI to be sent in the case that the second Doppler variation in a measurement result obtained by measuring the received first CSI-RS is greater than or equal to the second threshold value, wherein the target Doppler information is the first Doppler information, the second Doppler information, or the third Doppler information.

Optionally, the first reporting quantity includes the Doppler information, and the Doppler information is Doppler frequency shift, the CSI includes the Doppler frequency shift corresponding to a first delay path and a Doppler frequency shift difference between each of the delay paths in subsequent K2-1 delay paths and the first delay path;

when the first reporting quantity includes delay information and the delay information is an absolute delay value of the delay path, the CSI includes the absolute delay value of the first delay path and a difference between the absolute delay value of each of the delay paths in the subsequent K1-1 delay paths and the absolute delay value of the first delay path.

To achieve the above object, an embodiment of the present disclosure also provides a network side device, including a memory, a transceiver, and a processor; wherein the memory is configured to store a computer program; the transceiver is configured to receive and send data under the control of the processor; the processor is configured to read the computer program in the memory and perform the following operations:

sending at least one Channel State Information (CSI) resource setting information to a terminal, wherein the at least one CSI resource setting information includes first CSI resource setting information, the first CSI resource setting information includes configuration information of a first CSI-Reference Signal (CSI-RS) used for time-frequency tracking;

sending at least one CSI reporting setting information to the terminal, wherein the at least one CSI reporting setting information includes first CSI reporting setting information, the first CSI reporting setting information is used to indicate a first reporting quantity in CSI reported by the terminal, and the first reporting quantity includes delay information and/or Doppler information.

Optionally, the first CSI resource setting information includes S resource sets, each of the resource sets includes Y pieces of configuration information of the first CSI-RS, where S is a positive integer greater than or equal to 1, and Y is a positive integer greater than or equal to 1;
the first CSI resource setting information is associated with the first CSI reporting setting information.

Optionally, the first CSI resource setting information further includes configuration information of a second CSI-RS used for channel measurement;

the first CSI resource setting information is associated with the first CSI reporting setting information, and the first reporting quantity further includes a preset candidate configuration parameter; or
the at least one CSI reporting setting information further includes second CSI reporting setting information, and the first CSI resource setting information is associated with the first CSI reporting setting information and the second CSI reporting setting information, the second CSI reporting setting information is used to indicate a second reporting quantity in the CSI reported by the terminal, and the second reporting quantity includes the preset candidate configuration parameter.

Optionally, the first CSI resource setting information includes P resource sets, each of the resource sets includes X pieces of configuration information of the second CSI-RS and Z pieces of configuration information of the first CSI-RS, where P, X, and Z are each a positive integer greater than or equal to 1; or
the first CSI resource setting information includes Q resource sets, wherein each of the Q1 resource sets includes E pieces of configuration information of the second CSI-RS, and each of the Q2 resource sets includes F pieces of configuration information of the first CSI-RS, where Q is a positive integer greater than or equal to 2, Q = Q1 + Q2, where Q1, Q2, E, and F are each a positive integer greater than or equal to 1.

Optionally, the transceiver is further configured to:
in the case that the first CSI resource setting information includes Q resource sets, send first pairing signaling to the terminal, the first pairing signaling is used to indicate two associated paired resource sets, wherein a first one of the associated paired resource sets is indicated to be used for the channel measurement, and a second one of the associated paired resource sets is indicated to be used for the time-frequency tracking.

Optionally, the at least one CSI resource setting information further includes second CSI resource setting information, the second CSI resource setting information includes configuration information of the second CSI-RS used for channel measurement;

wherein the second CSI resource setting information and the first CSI resource setting information are associated with the first CSI reporting setting information, and the first reporting quantity further includes a preset candidate configuration parameter; or
the at least one CSI reporting setting information further includes second CSI reporting setting information, and the second CSI resource setting information is associated with the second CSI reporting setting information, the first CSI resource setting information is associated with the first CSI reporting setting information, the second CSI reporting setting information includes a second reporting quantity used for instructing the terminal to report CSI, and the second reporting quantity includes the preset candidate configuration parameter.

Optionally, the transceiver is further configured to:
send second pairing signaling to the terminal, wherein the second pairing signaling is used to indicate two associated paired resource sets that are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.

To achieve the above object, an embodiment of the present disclosure also provides an information transmission apparatus, including:

a second sending unit, configured to send at least one Channel State Information (CSI) resource setting information to a terminal, wherein the at least one CSI resource setting information includes first CSI resource setting information, the first CSI resource setting information includes configuration information of a first CSI-Reference Signal (CSI-RS) used for time-frequency tracking;
a third sending unit, configured to send at least one CSI reporting setting information to the terminal, wherein the at least one CSI reporting setting information includes first CSI reporting setting information, the first CSI reporting setting information is used to indicate a first reporting quantity in CSI reported by the terminal, and the first reporting quantity includes delay information and/or Doppler information.

Optionally, the first CSI resource setting information includes S resource sets, each of the resource sets includes Y pieces of configuration information of the first CSI-RS, where S is a positive integer greater than or equal to 1, and Y is a positive integer greater than or equal to 1;
the first CSI resource setting information is associated with the first CSI reporting setting information.

Optionally, the first CSI resource setting information further includes configuration information of a second CSI-RS used for channel measurement;

the first CSI resource setting information is associated with the first CSI reporting setting information, and the first reporting quantity further includes a preset candidate configuration parameter; or
the at least one CSI reporting setting information further includes second CSI reporting setting information, and the first CSI resource setting information is associated with the first CSI reporting setting information and the second CSI reporting setting information, the second CSI reporting setting information is used to indicate a second reporting quantity in the CSI reported by the terminal, and the second reporting quantity includes the preset candidate configuration parameter.

Optionally, the first CSI resource setting information includes P resource sets, each of the resource sets includes X pieces of configuration information of the second CSI-RS and Z pieces of configuration information of the first CSI-RS, where P, X, and Z are each a positive integer greater than or equal to 1; or
the first CSI resource setting information includes Q resource sets, wherein each of the Q1 resource sets includes E pieces of configuration information of the second CSI-RS, and each of the Q2 resource sets includes F pieces of configuration information of the first CSI-RS, where Q is a positive integer greater than or equal to 2, Q = Q1 + Q2, where Q1, Q2, E, and F are each a positive integer greater than or equal to 1.

Optionally, in the case that the first CSI resource setting information includes Q resource sets, the apparatus further includes:
a fourth sending unit, configured to send first pairing signaling to the terminal, the first pairing signaling is used to indicate two associated paired resource sets, wherein a first one of the associated paired resource sets is indicated to be used for the channel measurement, and a second one of the associated paired resource sets is indicated to be used for the time-frequency tracking.

Optionally, the at least one CSI resource setting information further includes second CSI resource setting information, the second CSI resource setting information includes configuration information of the second CSI-RS used for channel measurement;

wherein the second CSI resource setting information and the first CSI resource setting information are associated with the first CSI reporting setting information, and the first reporting quantity further includes a preset candidate configuration parameter; or
the at least one CSI reporting setting information further includes second CSI reporting setting information, and the second CSI resource setting information is associated with the second CSI reporting setting information, the first CSI resource setting information is associated with the first CSI reporting setting information, the second CSI reporting setting information includes a second reporting quantity used for instructing the terminal to report CSI, and the second reporting quantity includes the preset candidate configuration parameter.

Optionally, the apparatus further includes:
a fifth sending unit, configured to send second pairing signaling to the terminal, wherein the second pairing signaling is used to indicate two associated paired resource sets that are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.

To achieve the above object, an embodiment of the present disclosure also provides a processor-readable storage medium storing a computer program, wherein the computer program is used to cause a processor to execute the steps of the above information transmission method.

The above technical solutions of the present disclosure have at least the following beneficial effects:
in the technical solutions of the embodiments of the present disclosure, it receives at least one Channel State Information (CSI) resource setting information and at least one CSI reporting setting information sent by network side device, wherein the at least one CSI resource setting information includes first CSI resource setting information, the first CSI resource setting information includes configuration information of the first Channel State Information Reference Signal (CSI-RS) used for time-frequency tracking; at least one CSI reporting setting information includes first CSI reporting setting information, the first CSI reporting setting information is used to indicate a first reporting quantity in CSI reported by the terminal, the first reporting quantity includes delay information and/or Doppler information. Based on the first CSI resource setting information, the first CSI-RS is received; based on the first CSI reporting setting information, the CSI is sent to the network side device, wherein the CSI includes K1 pieces of delay information and/or K2 pieces of Doppler information, where K1 and K2 are each a positive integer greater than or equal to 1. In this way, the terminal actively reports delay information and/or Doppler information through CSI based on the first CSI reporting setting information configured by the network side device, thereby assisting the network side device to obtain more accurate time-varying channel state information and improve channel transmission performance.

## BRIEF DESCRIPTION OF THE DRAWINGS

Fig. 1 is a schematic diagram of a CSI feedback framework in related art;
Fig. 2 is a flowchart of an information transmission method according to an embodiment of the present disclosure;
Fig. 3 is another flowchart of an information transmission method according to an embodiment of the present disclosure;
Fig. 4 is a structural block diagram of a terminal according to an embodiment of the present disclosure;
Fig. 5 is a module schematic diagram of a terminal according to an embodiment of the present disclosure;
Fig. 6 is a structural block diagram of a network side device according to an embodiment of the present disclosure;
Fig. 7 is a module schematic diagram of a network side device according to an embodiment of the present disclosure.

## DETAILED DESCRIPTION

In the embodiments of the present disclosure, the term "and/or" describes the association relationship between associated objects, indicating that there can be three relationships, for example, A and/or B can mean: A exists alone, A and B exist simultaneously, and B exists alone. The symbol "/" generally indicates that the associated objects are in an "or" relationship.

In the embodiments of this application, the term "plurality" refers to two or more than two, and other quantifiers are similar to it.

The technical solutions in the embodiments of the present application will be clearly and thoroughly described below with reference to the accompanying drawings in the embodiments of the present application. Obviously, the described embodiments are only some of the embodiments of the present application, not all of them. Based on the embodiments in this application, all other embodiments obtained by those of ordinary skill in the art without making creative efforts fall within the scope of this application.

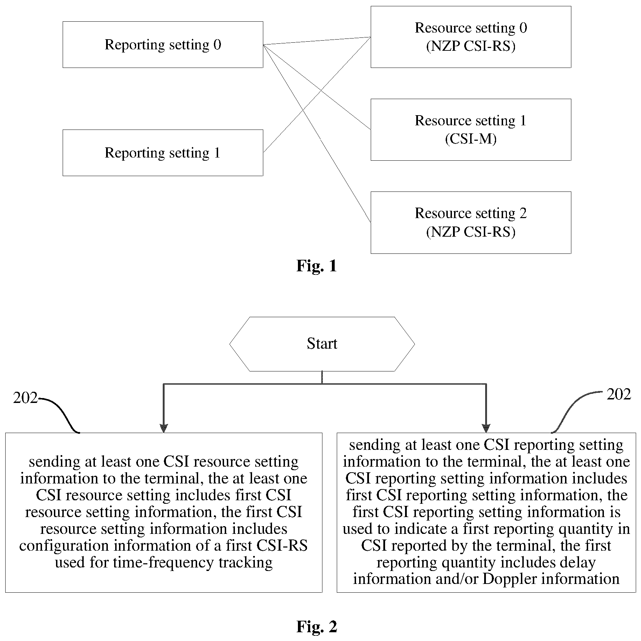

In an NR system, CSI reporting information may include Channel Quality Indicator (CQI), Precoding Matrix Indicator (PMI), CSI-RS Resource Indicator (CRI), Synchronization Signal/Physical Broadcast Channel Block Resource Indicator (SSBRI), Layer Indicator (LI), Rank Indicator (RI), and Layer 1 Reference Signal Received Power (L1-RSRP), wherein the LI is used to indicate the strongest column in the PMI for Phase-Tracking Reference Signal (PT-RS) mapping, while the SSBRI and the L1-RSRP are used for beam management, with one indicating the beam index and the other indicating beam strength. According to a principle of decoupling CSI measurement and CSI feedback, each User Equipment (UE) can be configured with $N \geq 1$ reporting setting and $G \geq 1$ resource setting. Each reporting setting is associated with one or more resource settings for channel and interference measurement, as shown in Fig. 1. For each Bandwidth Part (BWP), $N \leq 12$ and $G \leq 28$.

In the following, the CSI resource setting and the CSI reporting setting are briefly explained.

1. CSI resource setting

A CSI resource setting can be used for CSI acquisition, beam management, and interference measurement. Each of the resource settings includes S resource sets. Each of the resource sets includes Ks Channel State Information Reference Signal (CSI-RS) resources. An aperiodic resource setting can include one or more resource sets. For a periodic resource setting and a semi-persistent resource setting used for CSI acquisition, only one resource set can be included.

2. CSI reporting setting

A CSI reporting setting includes a configuration of the following parameters: a reporting CSI parameter (report quantity), CSI type (Type I or Type II), a codebook parameter configuration and a codebook subset constraint, a time-domain behavior and frequency-domain granularity of the PMI and the CQI, and a measurement constraint configuration.

In the NR system, CSI reporting supports a periodic reporting, a semi-persistent reporting, and an aperiodic reporting. For an aperiodic CSI reporting, each report setting can be associated with 1, 2, or 3 resource settings; for a periodic CSI reporting and a semi-persistent CSI reporting, each report setting can be associated with 1 or 2 resource settings. The frequency domain supports wideband or subband reporting.

When configured for wideband PMI + wideband CQI, RSRP, or wideband CQI reporting without PMI, it is a wideband CSI reporting. Other configurations are subband CSI reporting. A subband size for the subband CSI reporting is related to the configured bandwidth. Each configured bandwidth has two candidate subband sizes, selected by Radio Resource Control (RRC). The subband CSI reporting can be configured for contiguous subbands or non-contiguous subbands.

A combination of the report setting and the resource setting supported in the NR system includes:

that the periodic CSI reporting can only be associated with a periodic CSI-RS;
that the semi-persistent CSI reporting can be associated with the periodic CSI-RS and a semi-persistent CSI-RS;
that the aperiodic CSI reporting can be associated with the periodic CSI-RS, the semi-persistent CSI-RS, and the aperiodic CSI-RS.

In a Rel-15 version or a Rel-16 version, the NR system uses 1-port CSI-RS to implement a Tracking Reference Signal (TRS) function. A base station can configure, for the terminal based on a non-zero power CSI-RS (NZP CSI-RS) resource set through the RRC parameter trs-Info, the periodic or aperiodic TRS reference signal used for time-frequency tracking. Specifically, in a current protocol, the TRS is sent in the form of a TRS burst, and T time-domain symbols in one TRS burst can be specifically implemented by T CSI-RS resources configured in one resource set. For an FR1 (Frequency Range 1), one resource set includes 4 Channel Measurement Resources (CMR), corresponding to 4 symbols in two slots in one TRS burst. Each slot has a same time-frequency position, and same periodicity and bandwidth. For an FR2 (Frequency Range 2), one resource set includes 2 or 4 CMRs, corresponding to time-domain symbols in one/two slots in one TRS burst. Each slot has the same time-frequency position, and the same periodicity and bandwidth.

Currently, for an aperiodic TRS, the base station can configure the CSI reporting setting for the UE, but the reporting quantity in the reporting setting is none. For a periodic TRS, the base station does not configure the CSI reporting setting for the UE, so the UE will not report CSI information to the base station for TRS measurement.

In a Rel-17 version, a multi-point coordinated High-Speed Transmission-Single Frequency Network (HST-SFN) transmission scheme for a high-speed mobile scenario is standardized, including a non-SFN reference signal transmission scheme and a pre-compensation scheme. In the pre-compensation scheme, Doppler acquisition is obtained by the base station through measurement of an uplink reference signal SRS, rather than being mainly reported by the UE.

In summary, currently in the NR system, the CSI reporting information does not include Doppler and/or delay information, so the base station cannot estimate time-varying Doppler information or delay information of the current channel transmission through the CSI reported by the UE. If the base station cannot predict an accurate channel change within a certain period based on a current CSI, the precoding calculated based on the current CSI report cannot match the actual channel at each moment, resulting in a significant reduction in channel transmission performance.

Therefore, in order to solve the above problems, an embodiment of the present application provides an information transmission method and apparatus, a terminal, a network side device, and a medium, wherein the method and the apparatus are provided on the basis of a same inventive concept, and a principle of the method for solving the problem is similar to that of the apparatus, so the implementations of the apparatus and the method can refer to each other, and repetitive parts will not be elaborated.

To enable the terminal to actively report delay information and/or Doppler information to the network side device, to assist the network side device in obtaining more accurate time-varying channel state information and improving channel transmission performance, the network side device needs to pre-configure CSI resource setting information and CSI reporting setting information. The specific implementation processes are as follows.

As shown in Fig. 2, it is a schematic flowchart of an information transmission method provided by an embodiment of the present disclosure. The method is performed by the network side device and includes the following steps.

Step 201, sending at least one Channel State Information (CSI) resource setting information to the terminal, wherein the at least one CSI resource setting information includes first CSI resource setting information, the first CSI resource setting information includes configuration information of a first CSI-Reference Signal (CSI-RS) used for time-frequency tracking.

Optionally, the first Channel State Information Reference Signal (CSI-RS) used for time-frequency tracking is a TRS.

The network side device configures the terminal with the configuration information of the first CSI-RS used for time-frequency tracking. The purpose is to enable the terminal to receive the first CSI-RS based on the configuration information of the first CSI-RS, and then obtain time-frequency information and/or the Doppler information based on the first CSI-RS.

Optionally, a time-domain characteristic of each CSI resource setting information is periodic, aperiodic, or semi-persistent.

Step 202, sending at least one CSI reporting setting information to the terminal, wherein the at least one CSI reporting setting information includes first CSI reporting setting information, the first CSI reporting setting information is used to indicate a first reporting quantity in CSI reported by the terminal, the first reporting quantity includes the delay information and/or the Doppler information.

The network side device configures the terminal with the first CSI reporting setting information, the first CSI reporting setting information is used to indicate the first reporting quantity in the CSI reported by the terminal, the first reporting quantity includes the delay information and/or the Doppler information. The purpose is to enable the terminal to actively report the delay information and/or the Doppler information to the network side device based on the first CSI reporting setting information, thus allowing the network side device to obtain more accurate time-varying channel state information and improve the channel transmission performance.

In the information transmission method of the embodiments of the present disclosure, the network side device sends at least one Channel State Information (CSI) resource setting information to the terminal, wherein the at least one CSI resource setting information includes first CSI resource setting information, the first CSI resource setting information includes configuration information of a first CSI-Reference Signal (CSI-RS) used for time-frequency tracking; and the network side device also sends at least one CSI reporting setting information to the terminal, wherein the at least one CSI reporting setting information includes first CSI reporting setting information, the first CSI reporting setting information is used to indicate a first reporting quantity in CSI reported by the terminal, the first reporting quantity includes delay information and/or Doppler information. Thus, it provides a basis for enabling the terminal to actively report delay information and/or Doppler information to the network side device, thereby obtaining more accurate time-varying channel state information and improving channel transmission performance.

In an optional implementation, the first CSI resource setting information includes S resource sets, each of the resource sets includes Y pieces of configuration information of the first CSI-RS, where S is a positive integer greater than or equal to 1, and Y is a positive integer greater than or equal to 1; the first CSI resource setting information is associated with the first CSI reporting setting information.

As can be seen from the above, the configuration information of the first CSI-RS is separately included in a CSI resource setting (i.e., setting information of the first CSI resource). Optionally, the S resource sets are configured by the network side device as a RRC parameter trs-Info and sent to the terminal through RRC signaling, wherein each of the resource sets only includes Y pieces of configuration information of the first CSI-RS.

Optionally, the configuration information of the first CSI-RS in each of the resource sets of the first CSI resource setting information has a same slot frequency shift value and a same sending period.

It should be understood that that CSI resource setting information associated with CSI reporting setting information means that CSI resource setting information and CSI reporting setting information are associated on each BWP.

It should be noted that the purpose of CSI resource setting information associated with CSI reporting setting information is to instruct the terminal side to receive CSI-RS based on the CSI resource setting information, performs reception measurement on the CSI-RS to obtain a measurement result, and then report the measurement result based on the associated CSI reporting setting information.

The first CSI resource setting information associated with the first CSI reporting setting information means that the first CSI resource setting information and the first CSI reporting setting information are associated on each BWP.

In an optional implementation, the first CSI resource setting information also includes configuration information of a second CSI-RS used for channel measurement.

That is, the first CSI resource setting information includes the configuration information of the first CSI-RS used for time-frequency tracking, and also includes the configuration information of the second CSI-RS for channel measurement.

The purpose of the configuration information of the second CSI-RS used for channel measurement is to enable the terminal side to receive the second CSI-RS based on the configuration information of the second CSI-RS, thereby performing reception measurement based on the second CSI-RS to obtain the measurement result to assist the network side device in obtaining channel attribute information of a communication link.

The corresponding reporting settings of the implementation may have the following two modes.

Mode 1: the setting information of the first CSI resource is associated with the setting information of the first CSI reporting, and a first reporting quantity also includes a preset candidate configuration parameter.

It should be understood that the first reporting quantity includes not only time-frequency information and/or Doppler information but also the preset candidate configuration parameter. The preset candidate configuration parameter is a pre-configured feedback parameter related to channel measurement.

Optionally, the preset candidate configuration parameter is one of the following parameters or parameter combinations: 'none', 'CRI-RI-PMI-CQI', 'CRI-RI-i1', 'CRI-RI-i1-CQI', 'CRI-RI-CQI', 'CRI-RSRP', 'CRI-SINR', 'SSB-Index-RSRP', 'SSB-Index-SINR', or 'CRI-RI-LI-PMI-CQI'.

Mode 2: the at least one CSI reporting setting information further includes second CSI reporting setting information, the first CSI resource setting information is associated with the first CSI reporting setting information and the second CSI reporting setting information, the second CSI reporting setting information is used to indicate a second reporting quantity in the CSI reported by the terminal, and the second reporting quantity includes the preset candidate configuration parameter.

It should be understood that at least one CSI reporting setting information includes not only the first CSI reporting setting information but also the second CSI reporting setting information. The preset candidate configuration parameter is the pre-configured feedback parameter related to channel measurement.

Since the first CSI resource setting information includes not only the configuration information of the first CSI-RS used for time-frequency tracking but also the configuration information of the second CSI-RS used for channel measurement, the first CSI resource setting information is associated with the first CSI reporting setting information and the second CSI reporting setting information. Specifically, the configuration information of the first CSI-RS used for time-frequency tracking corresponds to the first CSI reporting setting information, and the configuration information of the second CSI-RS used for channel measurement corresponds to the second CSI reporting setting information.

Optionally, the network side device performs association configuration of the first CSI reporting setting information and the second CSI reporting setting information through higher-layer signaling.

Optionally, the first CSI resource setting information includes P resource sets, each of the resource sets includes X pieces of configuration information of the second CSI-RS and Z pieces of configuration information of the first CSI-RS, where P, X, and Z are each a positive integer greater than or equal to 1.

In this method, each of the resource sets of the first CSI resource setting information includes configuration information of two different CSI-RS (first CSI-RS and second CSI-RS).

Alternatively, the first CSI resource setting information includes Q resource sets, wherein each of Q1 resource sets includes E pieces of configuration information of the second CSI-RS, and each of Q2 resource sets includes F pieces of configuration information of the first CSI-RS, where Q is a positive integer greater than or equal to 2, Q = Q1 + Q2, where Q1, Q2, E, and F are each a positive integer greater than or equal to 1.

In this method, the first CSI resource setting information includes two different resource sets, one resource set includes configuration information of the first CSI-RS, and the other resource set includes configuration information of the second CSI-RS.

In an optional implementation, in the case that the first CSI resource setting information includes Q resource sets, the method of the embodiment of the present disclosure further includes:

sending first pairing signaling to the terminal, wherein the first pairing signaling is used to indicate two associated paired resource sets, wherein a first one of the associated paired resource sets is indicated to be used for the channel measurement, and a second one of the associated paired resource sets is indicated to be used for the time-frequency tracking.

Optionally, the first pairing signaling is RRC signaling or Medium Access Control Control Element (MAC CE) signaling. That is, the network side device (e.g., base station) associates and pairs every two resource sets by sending the RRC signaling or the MAC CE signaling. One of every two resource sets is a resource set in the Q1 resource sets, and the other is a resource set in the Q2 resource sets.

In this implementation, the network side device sends the first pairing signaling to the terminal to indicate which of the CSI-RS received by the terminal based on the configuration information of the CSI-RS in the resource set is used for channel measurement and which is used for time-frequency tracking, so as to facilitate the subsequent corresponding reception measurement.

In an optional implementation, the at least one CSI resource setting information further includes second CSI resource setting information, and the second CSI resource setting information includes configuration information of the second CSI-RS used for channel measurement.

That is, at least one CSI resource setting information includes not only the first CSI resource setting information but also the second CSI resource setting information. In other words, the configuration information of the first CSI-RS used for time-frequency tracking and the configuration information of the second CSI-RS used for channel measurement are respectively configured in different CSI resource setting information.

The corresponding reporting settings of the implementation may have the following two modes.

Mode i): the second CSI resource setting information and the first CSI resource setting information are associated with the first CSI reporting setting information, and the first reporting quantity further includes the preset candidate configuration parameter.

That is, the two CSI resource setting information are associated with one CSI reporting setting information. It should be understood that the first reporting quantity includes not only time-frequency information and/or Doppler information, but also the preset candidate configuration parameter. The preset candidate configuration parameter is a pre-configured feedback parameter related to channel measurement.

Mode ii): the at least one CSI reporting setting information further includes second CSI reporting setting information, the second CSI resource setting information is associated with the second CSI reporting setting information, the first CSI resource setting information is associated with the first CSI reporting setting information, and the second CSI reporting setting information includes the second reporting quantity used for instructing the terminal to report the CSI, and the second reporting quantity including the preset candidate configuration parameter.

It should be understood that at least one CSI reporting setting information includes not only the first CSI reporting setting information, but also the second CSI reporting setting information. The preset candidate configuration parameter is the pre-configured feedback parameter related to channel measurement.

Optionally, the network side device performs association configuration of the first CSI reporting setting information and the second CSI reporting setting information through higher-layer signaling.

In an optional implementation, the method of the embodiment of the present disclosure further includes: sending second pairing signaling to the terminal, wherein the second pairing signaling is used to indicate two associated paired resource sets that are in the second CSI resource setting information and the first CSI resource setting information respectively, wherein a first one of the associated paired resource sets is indicated to be used for the channel measurement, and a second one of the associated paired resource sets is indicated to be used for the time-frequency tracking.

Optionally, the second pairing signaling is RRC signaling or MAC CE signaling. That is, the base station associates and pairs every two resource sets by sending the RRC signaling or the MAC CE signaling. One of every two resource sets is a resource set in the second CSI resource setting information, and the other is a resource set in the first CSI resource setting information.

In this implementation, the network side device sends the second pairing signaling to the terminal to indicate which of the CSI-RSs received by the terminal based on the configuration information of the CSI-RS in the resource set is used for channel measurement, and which of these CSI RSs is used for time-frequency tracking, so as to facilitate the subsequent corresponding reception measurement.

Optionally, the associated configuration information of the second CSI-RS in second CSI resource setting information and the configuration information of the first CSI-RS in the first CSI resource setting information are configured with a same slot offset value and a same transmission period.

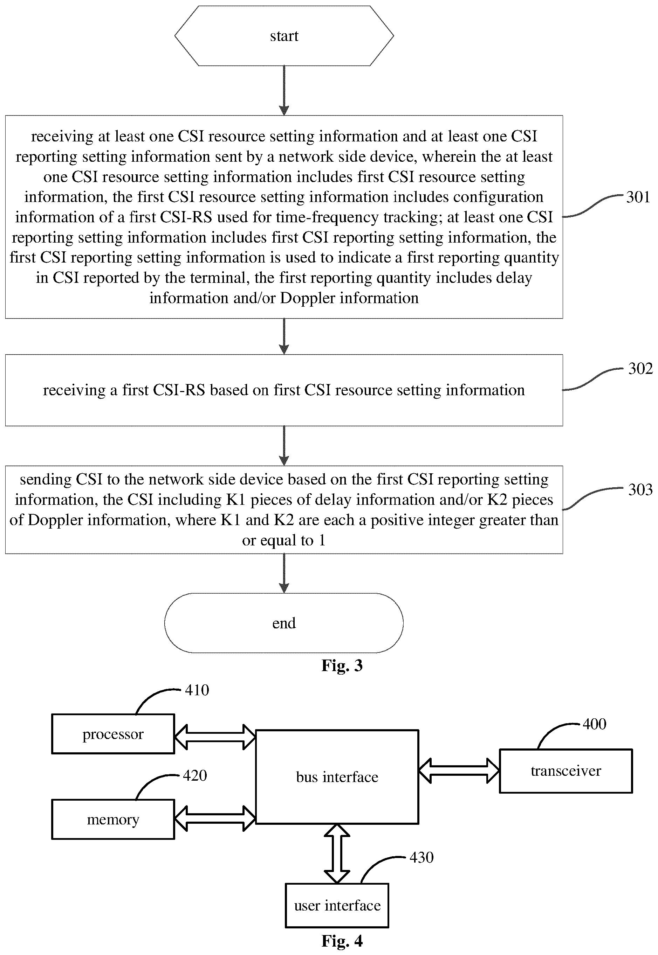

Reference is made to Fig. 3. In the following, after the network side device completes the above configuration, it specifically illustrates the implementation process that the terminal actively reports delay information and/or Doppler information based on the CSI resource setting information and the CSI reporting setting information sent by the network side device.

As shown in Fig. 3, a flow chart of an information transmission method provided by the embodiment of the present disclosure is performed by a terminal, including the following steps.

Step 301, receiving at least one Channel State Information (CSI) resource setting information and at least one CSI reporting setting information sent by a network side device, wherein the at least one CSI resource setting information includes first CSI resource setting information, the first CSI resource setting information includes configuration information of a first CSI-Reference Signal (CSI-RS) used for time-frequency tracking; the at least one CSI reporting setting information includes first CSI reporting setting information, the first CSI reporting setting information is used to indicate a first reporting quantity in CSI reported by the terminal, the first reporting quantity includes delay information and/or Doppler information

Step 302, receiving the first CSI-RS based on the first CSI resource setting information.

Specifically, it receives the first CSI-RS based on the configuration information of the first CSI-RS used for time-frequency tracking in the first CSI resource setting information.

Step 303, sending the CSI to the network side device based on the first CSI reporting setting information, the CSI including $K1$ pieces of delay information and/or $K2$ pieces of Doppler information, where $K1$ and $K2$ are each a positive integer greater than or equal to 1.

Since the first CSI reporting setting information is used to indicate the first reporting quantity in the CSI reported by the terminal, the first reporting quantity includes delay information and/or Doppler information, the CSI sent to the network side device includes $K1$ pieces of delay information and/or $K2$ pieces of Doppler information, wherein the delay information and/or Doppler information in the CSI is determined by the terminal based on the measurement result obtained by measuring the received first CSI-RS. That is, after step 302, the method of the embodiment of the present disclosure further includes:

performing a reception measurement on the first CSI-RS to obtain a first measurement result, wherein the first measurement result includes multiple delay information and/or multiple Doppler information.

Optionally, $K1$ is obtained through higher-layer signaling or a preset method, and $K2$ is obtained through higher-layer signaling or a preset method.

In the information transmission method of the embodiment of the present disclosure, the terminal actively reports the delay information and/or the Doppler information through the CSI based on the first CSI reporting setting information configured by the network side device, thereby assisting the network side device in obtaining more accurate time-varying channel state information and improving channel transmission performance.

In an optional implementation, the step 303 of sending the CSI to the network side device includes at least one of the following steps.

Step 3031, sending K1 pieces of quantized delay information to the network side device through a preset first quantization mode.

It should be noted that the delay information obtained from the first CSI-RS measurement is transformed into bit information that can be wirelessly transmitted through the preset first quantization mode.

Step 3032, sending K2 pieces of quantized Doppler information to the network side device through a preset second quantization mode.

It should be noted that the Doppler information obtained from the first CSI-RS measurement is transformed into bit information that can be wirelessly transmitted through the preset second quantization mode.

In an optional implementation, the step 303 of sending the CSI to the network side device includes the following steps.

Step S1, when the first reporting quantity includes delay information and K1=1, sending the delay information of a strongest delay path to the network side device.

The delay information of the strongest delay path is the delay information of the delay path with the highest corresponding RSRP or SINR.

The reporting of the strongest delay path primarily aims to allow the network side device to intuitively obtain the delay information of the strongest path while reducing the reporting overhead. Since the strongest path accounts for the largest power proportion in the current channel, the network side device can generally infer overall channel information based on the information of the strongest path.

Step S2, when the first reporting quantity includes delay information and K1 > 1, sending the delay information of K1 delay paths to the network side device according to a first preset priority rule.

The first preset priority rule can be set in a descending order of RSRPs and/or SINRs corresponding to the delay paths, wherein the delay information corresponding to the delay path with a high RSRP/SINR has a higher priority than the delay information corresponding to the delay path with a low power.

The first preset priority rule can also be set in an ascending order of the absolute values of the delay paths, wherein the delay information corresponding to the delay path with a small absolute value has a higher priority than the delay information corresponding to the delay path with a small absolute value.

Step S3, when the first reporting quantity includes Doppler information and K2 = 1, sending the Doppler information of the strongest delay path to the network side device.

The Doppler information of the strongest path of the delay path is the Doppler information of the delay path with the highest corresponding RSRP or SINR.

Reporting the strongest path primarily aims to allow the network-side device to intuitively obtain the Doppler information of the strongest path while reducing reporting overhead. Since the strongest path accounts for the largest power proportion in the current channel, the network side device can generally infer overall channel information based on the strongest path information.

Step S4, when the first reporting quantity includes Doppler information and K2 > 1, sending the Doppler information of K2 delay paths to the network side device according to a second preset priority rule.

The second preset priority rule can be set in a descending order of the RSRPs and/or the SINRs corresponding to the delay paths, wherein the Doppler information corresponding to the delay path with the high RSRP/SINR has a higher priority than the Doppler information corresponding to the delay path with the low power.

The second preset priority rule can also be set in an ascending order of the absolute values of the delay paths, wherein the Doppler information corresponding to the delay path with a small absolute value has a higher priority than the Doppler information corresponding to the delay path with a small absolute value.

Optionally, when the first reporting quantity includes the Doppler information, the Doppler information includes at least one of the followings:

first Doppler information, wherein the first Doppler information is Doppler frequency shift;
second Doppler information, wherein the second Doppler information represents a first Doppler variation caused by acceleration of relative motion between the terminal and the network side device; or
third Doppler information, wherein the third Doppler information represents a second Doppler variation between a current report and a previous report.

Based on this, in an optional implementation, when the first reporting quantity includes the second Doppler information, the first CSI reporting setting information further includes a first threshold value; correspondingly, the method of the embodiment of the present disclosure further includes following steps before step 303.

Step S11, when the first Doppler variation in the measurement result obtained by measuring the received first CSI-RS is less than the first threshold value, setting as null a field corresponding to the second Doppler information in the CSI to be sent.

The first Doppler variation is less than the first threshold value, indicating that the Doppler variation caused by the acceleration of the relative motion between the terminal and the network side device is not significant, which has little impact on assisting the network side device to obtain more accurate time-varying channel state information. Therefore, in order to save resources, the terminal does not report the second Doppler information. That is, the field corresponding to the second Doppler information in the CSI to be sent is set as null, indicating that the reported second Doppler information is none.

Step S12, when the first Doppler variation in the measurement result obtained by measuring the received first CSI-RS is greater than or equal to the first threshold value, setting as the first Doppler variation the field corresponding to the second Doppler information in the CSI to be sent.

The first Doppler variation is greater than or equal to the first threshold value, indicating that the Doppler variation caused by the acceleration of the relative motion between the terminal and the network side device is significant, which has a great impact on assisting the network side device to obtain more accurate time-varying channel state information. Therefore, the terminal needs to report the second Doppler information.

In another optional implementation, when the first reporting quantity includes the third Doppler information, the first CSI reporting setting information further includes a second threshold value.

Correspondingly, the method of the embodiment of the present disclosure further includes the following steps before step 303.

Step S21, when the second Doppler variation obtained from the measurement result for receiving the first CSI-RS is less than the second threshold value, setting as null a field corresponding to target Doppler information in the CSI to be sent.

The second Doppler variation is less than the second threshold value, indicating that the second Doppler variation between the current report and the previous report is not significant, which has little impact on assisting the network side device to obtain more accurate time-varying channel state information. Therefore, in order to save resources, the terminal does not report the target Doppler information this time. That is, the field corresponding to the target Doppler information in the CSI to be sent is set as null, indicating that the reported target Doppler information is none.

The target Doppler information is the first Doppler information, the second Doppler information, or the third Doppler information

Step S22, when the second Doppler variation obtained from the measurement result for receiving the first CSI-RS is greater than or equal to the second threshold value, setting as the target Doppler information the field corresponding to the target Doppler information in the CSI to be sent, wherein the target Doppler information is the first Doppler information, the second Doppler information, or the third Doppler information.

The second Doppler variation is less than the second threshold value, indicating that the second Doppler variation between the current report and the previous report is significant, which has a greater impact on assisting the network side device to obtain more accurate time-varying channel state information. Therefore, the terminal needs to report the target Doppler information this time.

Optionally, when the first reporting quantity includes the Doppler information, and the Doppler information is Doppler frequency shift, the CSI includes the Doppler frequency shift corresponding to a first delay path and a Doppler frequency shift difference between each of the delay paths in subsequent K2-1 delay paths and the first delay path;

The reporting of the difference mainly aims to enable the network side device to intuitively obtain the relative information for the first delay path while reducing a quantization bit and reporting overhead.

When the first reporting quantity includes delay information and the delay information is an absolute delay value of the delay path, the CSI includes the absolute delay value of the first delay path and a difference between the absolute delay value of each of the delay paths in the subsequent K1-1 delay paths and the absolute delay value of the first delay path.

The reporting of the difference mainly aims to allow the network side device to intuitively obtain the relative information for the first delay path while reducing a quantization bit and reporting overhead.

In an optional implementation, the first CSI resource setting information includes S resource sets, each of the resource sets includes Y pieces of configuration information of the first CSI-RS, where S is a positive integer greater than or equal to 1, and Y is a positive integer greater than or equal to 1; the first CSI resource setting information is associated with the first CSI reporting setting information.

Optionally, the configuration information of the first CSI-RS in each of the resource sets of the first CSI resource setting information has the same slot frequency shift value and the same sending period.

In the following, an embodiment 1 illustrates, when the configuration information of the first CSI-RS is independently in a CSI resource setting (i.e., the first CSI resource setting information) and the first CSI resource setting information is associated with the first CSI reporting setting information, the specific implementation process of the method according to the embodiments of the present disclosure.

Embodiment 1

Step 1) A base station sends first CSI resource setting information to a terminal, wherein the first CSI resource setting information includes S resource sets, each of the resource sets includes Y pieces of configuration information of a first CSI-RS used for time-frequency tracking.

That is, the base station configures the configuration information for the CSI-RS (such as TRS) used for time-frequency tracking separately in one piece of resource setting information. Each of the resource setting information includes S resource sets, all of which are configured as a RRC parameter trs-Info. Each of the resource sets includes only 2 pieces of configuration information of the first CSI-RS or 4 pieces of configuration information of the first CSI-RS.

A time-domain characteristic of the first CSI resource setting information can be periodic, semi-periodic, or semi-persistent.

For a frequency range (FR), such as an FR1, each of the resource sets includes 4 pieces of configuration information of the first CSI-RS, each configuration information of the first CSI-RS occupies one symbol resource, and each slot includes two symbols, so all resources correspond to two slots in a TRS burst.

For an FR2, each of the resource sets includes 2 pieces of configuration information of the first CSI-RS or 4 pieces of configuration information of the first CSI-RS, each configuration information of the first CSI-RS occupies one symbol resource, and each slot includes two symbols, so all resources correspond to 1 slot or 2 slots in the TRS burst.

Optionally, the configuration information of the first CSI-RS in each of the resource sets is configured with a same slot offset value and a same transmission period.

Step 2) The base station sends the first CSI reporting setting information to the terminal, the first CSI reporting setting information is used to indicate a first reporting quantity in the CSI reported by the terminal, and the first reporting quantity includes delay information and/or Doppler information.

For example, the first reporting quantity includes {delay information, Doppler information} or {Doppler information}.

That is, the base station associates the first CSI reporting setting information with the first CSI resource setting information.

Step 3) The terminal receives the first CSI-RS through the first CSI resource setting information sent by the base station.

Step 4) The terminal determines that the CSI reporting quantity includes delay information and/or Doppler information through the first CSI reporting setting information sent by the base station.

Step 5) The terminal performs reception measurement on the first CSI-RS to obtain Doppler information and/or the delay of the delay path in the current channel transmission.

Optionally, Doppler information and/or the delay of the delay path in the current channel transmission can be estimated through the following calculation method.

First, performing Inverse Discrete Fourier Transform (IDFT) calculation on the frequency-domain channel of the first CSI-RS to obtain a Power Delay Profile (PDP).

Then, the first K effective delay paths are selected according to a preset selection principle, and the absolute delay values $\tau_0$, ..., $\tau_j$ of the K delay paths are obtained.

Optionally, the preset selection principle is a maximum power principle. That is, based on PDP, K effective delay paths are selected from multiple delay paths corresponding to the PDP in the descending order of the powers.

Taking 4 first CSI-RSs as a TRS burst as an example, there are 4 symbols in a Physical Resource Block (PRB) used for TRS transmission. If Resource Element (RE) positions of symbol 5 and symbol 8 in two slots are the same, the two symbols can be correlated to obtain the correlation value:

$$C_1^{(r,j)} = \sum_{p=0}^{1} \sum_{i=0}^{1} h_{\text{IDFT},l_{\text{RS}}^{(p)}=i,k'=MaxIdx_{idx=j}^{(r)}}^{(r,p)*} \cdot h_{\text{IDFT},l_{\text{RS}}^{(p)}=i+2,k'=MaxIdx_{idx=j}^{(r)}}^{(r,p)}$$

wherein, $MaxIdx_{idx=j}^{(r)}$ represents the position of the effective path j corresponding to the time-domain channel after DIFT transformation.

Then, the phase of the correlation value corresponding to effective path j is:

$$\theta^{(r,j)} = \arctan\left(imag\left(C_1^{(r,j)}\right) / real\left(C_1^{(r,j)}\right)\right)$$

According to the quadrant where $C_1^{(r,j)}$ is located, adjust $\theta^{(r,j)}$ to obtain the Doppler frequency shift of the effective path j corresponding to the rth antenna:

$$\theta_{\mathrm{a}}^{(r,j)} = \theta^{(r,j)} / \left(2\pi \cdot 0.0005\right)$$

Step 6) The terminal reports CSI through the first CSI reporting setting information sent by the base station and Doppler information and/or the delay of the delay path in the current channel transmission, wherein the CSI includes Doppler information and/or the delay information of K effective delay paths.

In the embodiment, each of the number of delay information and the number of Doppler information is equal to K.

Optionally, K can be obtained through higher-layer signaling or a preset method.

Optionally, the terminal only reports K (which is greater than or equal to 1) pieces of delay information and/or Doppler information through a preset quantization mode.

Optionally, if K=1, the UE reports Doppler information and/or the delay information of the one strongest delay path (i.e., the highest power).

Optionally, if K>1, the UE reports Doppler information and/or the delay information of K delay paths according to a priority rule.

The preset quantization mode used for quantizing the K Doppler frequency shifts $\theta^j$ can be referred to as follows.

For the FR1 4GHz medium and high speed scenario (50km/h-200km/h), the Doppler range is $\pm185$Hz~$\pm740$Hz, and each 30Hz can be quantized into a codeword according to the maximum Doppler range, then the Doppler quantization bit is 8bits. The UE only reports K pieces of (greater than or equal to 1) delay information and/or Doppler information through the preset quantization mode.

For the FR2 30GHz medium and high speed scenario (50km/h-200km/h), the Doppler range is $\pm1387$Hz~$\pm5500$Hz, and each 100Hz can be quantized into a codeword according to the maximum Doppler range, then the Doppler quantization bit is 9 bits. The UE only reports K (which is greater than or equal to 1) pieces of delay information and/or Doppler information through the preset quantization mode.

For a 15KHz Subcarrier Space (SCS), the maximum symbol duration of 1ms/14=71.42$\mu$s can be divided into 128 codewords, totaling 9 bits, and each quantization bit is 0.55$\mu$s.

In an optional implementation, the first CSI resource setting information further includes configuration information of a second CSI-RS used for channel measurement. That is, the first CSI resource setting information includes not only the configuration information of the first CSI-RS used for time-frequency tracking, but also the configuration information of the second CSI-RS used for channel measurement.

The corresponding reporting settings of the implementation may have the following two modes:

   i) The first CSI resource setting information is associated with the first CSI reporting setting information, and the first reporting quantity further includes a preset candidate configuration parameter;
   ii) The at least one CSI reporting setting information further includes second CSI reporting setting information, the first CSI resource setting information is associated with the first CSI reporting setting information and the second CSI reporting setting information, the second CSI reporting setting information is used to indicate a second reporting quantity in the CSI reported by the terminal, and the second reporting quantity includes the preset candidate configuration parameter.

Optionally, when the preset candidate configuration parameter includes a Precoding Matrix Indicator (PMI), and the number M of frequency-domain basis vectors in the PMI is less than K1, first M pieces of delay information in the K1 pieces of delay information are non-zero, and (M+1)th delay information to K1[th] delay information are zero; when the preset candidate configuration parameter includes the PMI, and the number M of frequency-domain basis vectors in the PMI is less than K2, first M pieces of Doppler information in the K2 pieces of Doppler information are non-zero, and (M+1)th Doppler information to K2[th] Doppler information are zero.

Based on the implementation, the method of the embodiment of the present disclosure further includes: receiving the second CSI-RS based on the first CSI resource setting information.

The method of the embodiment of the present disclosure further includes: performing reception measurement on the second CSI-RS to obtain the second measurement result, and the second measurement result includes the preset candidate configuration parameter.

Correspondingly, for mode 1), step 303 may further include: sending the CSI to the network side device based on the first CSI reporting setting information and the second measurement result, the CSI includes the preset candidate configuration parameter, and K1 pieces of delay information and/or K2 pieces of Doppler information.

For mode 2), step 303 may further include: sending the CSI to the network side device based on the first CSI reporting setting information, the second CSI reporting setting information, and the second measurement result, the CSI includes the preset candidate configuration parameter, and K1 pieces of delay information and/or K2 pieces of Doppler information.

Optionally, the first CSI resource setting information includes P resource sets, each of the resource sets includes X pieces of configuration information of the second CSI-RS and Z pieces of configuration information of the first CSI-RS, where P, X, and Z are all positive integers greater than or equal to 1.

In this method, each of the resource sets of the first CSI resource setting information includes configuration information of two different CSI-RS (first CSI-RS and second CSI-RS).

Alternatively, the first CSI resource setting information includes Q resource sets, wherein each of Q1 resource sets includes E pieces of configuration information of the second CSI-RS, and each of Q2 resource sets includes F pieces of configuration information of the first CSI-RS, where Q is a positive integer greater than or equal to 2, Q = Q1 + Q2, where Q1, Q2, E, and F are each a positive integer greater than or equal to 1.

In this method, the first CSI resource setting information includes two different resource sets, one resource set includes configuration information of the first CSI-RS, and the other resource set includes configuration information of the second CSI-RS.

In an optional implementation, in the case that the first CSI resource configuration information includes Q resource sets, the method of the embodiment of the present disclosure further includes:
receiving first pairing signaling sent by the network side device, wherein the first pairing signaling is used to indicate two associated paired resource sets, wherein a first one of the associated paired resource sets is indicated to be used for the channel measurement, and a second one of the associated paired resource sets is indicated to be used for the time-frequency tracking.

Optionally, the first pairing signaling is RRC signaling or MAC CE signaling.

In this implementation, the terminal can determine, based on the configuration information of the CSI-RSs in the resource set by receiving the first pairing signaling sent by the network side device, which of the received CSI-RSs is used for channel measurement and which of the received CSI-RSs is used for time-frequency tracking, so as to facilitate the subsequent corresponding reception measurement.

In the following, an embodiment 2 illustrates the specific implementation process of the method according to the embodiments of the present disclosure, wherein the first CSI resource setting information further includes the configuration information of the second CSI-RS used for channel measurement, that is, the configuration information of the first CSI-RS used for time-frequency tracking and the configuration information of the second CSI-RS used for channel measurement are configured in one CSI resource setting information.

Embodiment 2

The following steps 1-1) and 1-2) are optional, wherein the step 1-1) corresponds to the situation that each of resource sets of first CSI resource setting information includes two different CSI-RSs (first CSI-RS and second CSI-RS); and the step 1-2) corresponds to the situation that the first CSI resource setting information includes two different resource sets, wherein one of the resource sets includes configuration information of a first CSI-RS, and the other resource set includes configuration information of a second CSI-RS.

Step 1-1) A base station sends the first CSI resource setting information to a terminal, wherein the first CSI resource setting information includes P resource sets, each of the resource sets includes X pieces of configuration information of the second CSI-RS used for channel measurement and Z pieces of configuration information of the first CSI-RS;

Taking P=1, X=8 as an example, the base station configures each CSI resource setting information to include 1 resource set, each of the resource sets includes 8 pieces of configuration information of the second CSI-RS used for channel measurement, and 2 or 4 pieces of configuration information of the first CSI-RS, wherein the configuration information of the first CSI-RS is configured as trs Info.

A time-domain characteristic of the first CSI resource setting information can be periodic, semi-periodic, or semi-persistent.

For an FR1, each of the resource sets includes 8+4 pieces (8 for second CSI-RS and 4 for first CSI-RS) of configuration information of the CSI-RS, each configuration information of the first CSI-RS occupies one symbol resource, and each slot includes two symbols, so all resources correspond to two slots in a TRS burst.

For an FR2, each of the resource sets includes 8+2 pieces (8 for second CSI-RS and 2 for first CSI-RS) of configuration information of the CSI-RS, or 8+4 pieces (8 for second CSI-RS and 4 for first CSI-RS) of configuration information of the CSI-RS, each configuration information of the first CSI-RS occupies one symbol resource, and each slot includes two symbols, so all resources correspond to one or two slots in the TRS burst.

Optionally, the time-domain characteristics of the configuration information of the first CSI-RS and the configuration information of the second CSI-RS in the first CSI resource setting information are consistent.

Optionally, the configuration information of all CSI-RSs in each of the resource sets is configured with a same slot offset value and a same sending period.

Optionally, 2 pieces of configuration information of the first CSI-RS or 4 pieces of configuration information of the first CSI-RS in each of the resource sets is configured as the RRC parameter trs Info, wherein the configuration information of the first CSI-RS is configured with the same slot offset value and the same sending period.

Step 1-2) The base station sends the first CSI resource setting information to the terminal, wherein the first CSI resource setting information includes Q resource sets, each of Q1 resource sets includes E pieces of configuration information of the second CSI-RS used for channel measurement, and each of Q2 resource sets includes F pieces of configuration information of the first CSI-RS.

Taking Q1=1, Q2=1, and E=8 as an example. The first resource set (Q1) includes 8 pieces of configuration information of the second CSI-RS used for channel measurement, and the second resource set (Q2) includes 2 pieces of configuration information of the first CSI-RS or 4 pieces of configuration information of the first CSI-RS, wherein the configuration information of the first CSI-RS is configured as trs Info.

The time-domain characteristic of each first CSI resource setting information is periodic, semi-periodic, or semi-persistent.

For the FR1, each of the resource sets includes 8+4 pieces (8 for second CSI-RS and 4 for first CSI-RS) of configuration information of the CSI-RS, and the configuration information of each first CSI-RS occupies one symbol resource, and each slot includes two symbols, so all resources correspond to two slots in a TRS burst.

For the FR2, each of the resource sets includes 8+2 pieces (8 for second CSI-RS and 2 for first CSI-RS) of configuration information of the CSI-RS or 8+4 pieces (8 for second CSI-RS and 4 for first CSI-RS) of configuration information of the CSI-RS, and each piece of configuration information of the first CSI-RS occupies one symbol resource, and each slot includes two symbols, so all resources correspond to 1 or 2 slots in a TRS burst.

Optionally, the time-domain characteristics of the pieces of the configuration information of the second CSI-RS in the Q1 resource set of the first CSI resource setting information are consistent, and the time-domain characteristics of the pieces of configuration information of the first CSI-RS in the Q2 resource set of the first CSI resource setting information are consistent.

Optionally, the configuration information of the second CSI-RS in each of the Q1 resource sets is configured with the same slot offset value and the same sending period; the configuration information of the first CSI-RS in each of the Q2 resource sets is configured with the same slot offset value and the same sending period.

The following steps 2-1) and 2-2) are optional, wherein step 2-1) corresponds to the situation that the base station associates one piece of CSI reporting setting information with the first CSI resource setting information; and step 2-2) corresponds to the situation that the base station associates two pieces of CSI reporting setting information with the first CSI reporting resource information. It should be noted that step 2-1) can be combined with step 1-1) or step 1-2), and step 2-2) can be combined with step 1-1) or step 1-2).

Step 2-1) The base station sends the first CSI reporting setting information to the terminal, the first CSI reporting setting information is used to indicate a first reporting quantity in the CSI reported by the terminal, and the first reporting quantity includes a preset candidate configuration parameter, and delay information and/or Doppler information.

In other words, the base station associates one CSI reporting setting information with the first CSI resource setting information, wherein the first reporting quantity in the reporting setting information includes, but is not limited to, {delay information, Doppler information} or { Doppler information}, that is, first CSI feedback quantity includes the preset candidate configuration parameter in addition to the delay information and/or the Doppler information.

It should be noted that the preset candidate configuration parameter is a pre-configured parameter related to channel measurement.

Step 2-2) The base station sends the first CSI reporting setting information and the second CSI reporting setting information to the terminal, wherein the first CSI reporting setting information is used to indicate the first reporting quantity in the CSI reported by the terminal, and the second CSI reporting setting information is used to indicate the second reporting quantity in the CSI reported by the terminal, and the second reporting quantity includes the preset candidate configuration parameter, and the first CSI resource setting information is associated with the first CSI reporting setting information and the second CSI reporting setting information.

That is, the base station associates 2 pieces of CSI reporting setting information with the first CSI reporting resource information, wherein the second reporting quantity of one reporting setting information (the second CSI reporting setting information) is the preset candidate configuration parameter, such as {cri-RI-PMI-CQI}, and the first reporting quantity of the other CSI reporting setting information (the first CSI reporting setting information) is the delay information and/or the Doppler information, such as {delay information, Doppler information} or {Doppler information}.

It should be noted that the preset candidate configuration parameter is the pre-configured parameter related to channel measurement.

Step 3) The terminal receives the second CSI-RS used for channel measurement and the first CSI-RS used for time-frequency tracking through the first CSI resource setting information sent by the base station.

Step 4) The terminal determines that the reporting quantity includes a preset candidate configuration parameter value, delay information and/or Doppler information through the CSI reporting setting information sent by the base station.

For example, the preset candidate configuration parameter include cri-RI-PMI-CQI. If the CSI reporting setting information only includes the first CSI reporting setting information, the terminal determines that the CSI reporting quantity of the terminal includes cri-RI-PMI-CQI, the delay information and/or the Doppler information through the first reporting quantity in the first CSI reporting setting information sent by the base station.

If the CSI reporting setting information includes the first CSI reporting setting information and the second CSI reporting setting information, the terminal determines that the CSI reporting quantity of the terminal includes the delay information and/or the Doppler information through the first reporting quantity in the first CSI reporting setting information, and determines that the CSI reporting quantity of the terminal includes cri-RI-PMI-CQI through the second reporting quantity in the second CSI reporting setting information.

Step 5) The terminal performs reception measurement on the second CSI-RS used for channel measurement and calculates the preset candidate configuration parameter value, e.g., CRI-RI-PMI-CQI information.

If the configuration information of the first CSI-RS and the configuration information of the second CSI-RS are configured in one resource set, the CRI is reported only based on the first 8 CSI-RS.

Step 6) The terminal performs reception measurement on the first CSI-RS used for time-frequency tracking to obtain Doppler information and/or the delay of the delay path in the current channel transmission.

The specific calculation method for obtaining Doppler information and/or the delay of the delay path in the current channel transmission can refer to step 5) in the embodiment 1, which will not be further elaborated herein.

Steps 7-1) and 7-2) are optional steps.

Step 7-1) The terminal reports the CSI through the first CSI reporting setting information and the CSI-RS measurement result sent by the base station, including K pieces of delay information and/or Doppler information, and the preset candidate configuration parameter value.

Step 7-2) The terminal reports the CSI through the first CSI reporting setting information, the second CSI reporting setting information and the CSI-RS measurement result sent by the base station, including K pieces of delay information and/or Doppler information, and the preset candidate configuration parameter value.

The CSI-RS measurement results include measurement results in steps 5) and 6).

In the embodiment, each of the number of pieces of delay information and the number of pieces of Doppler information is equal to K.

Optionally, K can be obtained through higher-layer signaling or a preset method.

It should be noted that the preset quantization mode for quantizing K pieces of delay information and/or Doppler information can refer to the description of the embodiment 1, which will not be further elaborated herein.

If the current codebook is set to be R16TypeII, the UE can first calculate the first-level precoding matrix W1, the second-level precoding matrix W2, and frequency-domain basis vector information based on the second CSI-RS used for channel measurement, wherein the number of the reported frequency-domain basis vectors is configured as M by the higher-layer signaling, and the terminal can represent M delay paths based on the M basis vectors in the calculated frequency-domain basis vectors.

Specifically, the M delay paths can be compared with the K delay paths estimated based on the PDP, and the M pieces of Doppler information corresponding to the M respectively can be calculated accordingly.

Optionally, when the number M of frequency-domain basis vectors in the PMI is less than K, the terminal reports the Doppler information and/or the delay information of the K delay paths, wherein the Doppler information and/or the delay information of first M delay paths are non-zero, and the Doppler information and/or the delay information of $(M+1)^{th}$ delay path to Doppler information and/or the delay information of $K^{th}$ delay path are zero.

Optionally, the terminal performs differential feedback of the delay information and/or Doppler information based on the previous CSI.

Specifically, when a difference between the delay of each current delay path and the delay of the corresponding previous delay path is less than R1, and/or a difference between the Doppler frequency shift of each current delay path and the Doppler frequency shift of the corresponding previous delay path is less than R2, the delay and/or Doppler frequency shift is not reported at the current moment.

It should be noted that R1 and R2 are preset thresholds.

In another optional implementation, the at least one CSI resource setting information further includes second CSI resource setting information, and the second CSI resource setting information includes configuration information of the second CSI-RS used for channel measurement.

That is, at least one CSI resource setting information includes not only the first CSI resource setting information but also the second CSI resource setting information. In other words, the configuration information of the first CSI-RS used for time-frequency tracking and the configuration information of the second CSI-RS used for channel measurement are respectively configured in different CSI resource setting information.

The corresponding reporting settings of the implementation may have the following two modes.

Mode 1): the second CSI resource setting information and the first CSI resource setting information are associated with the first CSI reporting setting information, and the first reporting quantity further includes the preset candidate configuration parameter.

That is, the two CSI resource setting information are associated with one CSI reporting setting information. It should be understood that the first reporting quantity includes not only time-frequency information and/or Doppler information, but also the preset candidate configuration parameter.

Mode 2): the at least one CSI reporting setting information further includes second CSI reporting setting information, the second CSI resource setting information is associated with the second CSI reporting setting information, the first CSI resource setting information is associated with the first CSI reporting setting information, and the second CSI reporting setting information includes the second reporting quantity used for instructing the terminal to report the CSI, and the second reporting quantity includes the preset candidate configuration parameter.

It should be understood that at least one CSI reporting setting information includes not only the first CSI reporting setting information, but also the second CSI reporting setting information.

In an optional implementation, the method of the embodiment of the present disclosure further includes: receiving second pairing signaling sent by the network side device, wherein the second pairing signaling is used to indicate two associated paired resource sets that are in the second CSI resource setting information and the first CSI resource setting information respectively, wherein a first one of the associated paired resource sets is indicated to be used for the channel measurement, and a second one of the associated paired resource sets is indicated to be used for the time-frequency tracking.

Optionally, the second pairing signaling is RRC signaling or MAC CE signaling.

In this implementation, the terminal can determine, based on the configuration information of the CSI-RS in the resource set by receiving the second pairing signaling sent by the network side device, which of the received CSI-RSs is used for channel measurement and which of the received CSI-RSs is used for time-frequency tracking, so as to facilitate the subsequent corresponding reception measurement.

In the following, an embodiment 3 illustrates the specific implementation process of the method according to the embodiments of the present disclosure, wherein at least one CSI resource setting information includes not only the first CSI resource setting information but also the second CSI resource setting information, that is, the configuration information of the first CSI-RS used for time-frequency tracking and the configuration information of the second CSI-RS used for channel measurement are respectively configured in different CSI resource setting information.

Embodiment 3

Step 1) A base station sends first CSI resource setting information and second CSI resource setting information to a terminal. The first CSI resource setting information includes configuration information of first CSI-RS used for time-frequency tracking, and the second CSI resource setting information includes configuration information of second CSI-RS used for channel measurement.

That is, the base station configures the configuration information of the first CSI-RS (e.g., TRS) and the second CSI-RS in two resource settings respectively, and can associate resources through implicit or explicit configuration.

Optionally, the base station sends to the terminal through RRC signaling or MAC CE signaling to associate and pair the resource set in the first CSI resource setting information with the resource set in the second CSI resource setting information, wherein each pairing signaling includes indication information of the two resource sets, indicating that the CSI-RS in the first resource set is used for channel measurement and the CSI-RS in the second resource set is used for time-frequency tracking.

Optionally, a time-domain characteristic of the first CSI resource setting information is periodic, semi-periodic, or semi-persistent; the time domain characteristic of the second CSI resource setting information is periodic, semi-periodic or semi-persistent.

Optionally, the time domain characteristics of the first CSI resource setting information and the second CSI resource setting information are consistent.

Optionally, the configuration information of all CSI-RSs in the first CSI resource setting information and the second CSI resource setting information are configured with a same slot offset value and a same sending period.

Optionally, 2 or 4 pieces of CSI-RS configuration information in the resource set of the first CSI resource setting information are configured as trsInfo, and are configured with the same slot offset value and the same sending period.

The following steps 2-1) and 2-2) are optional steps, wherein step 2-1) corresponds to the situation where the base station associates one CSI reporting setting information with the first CSI resource setting information and the second CSI resource setting information; step 2-2) corresponds to the situation where the base station associates respective pieces of CSI reporting setting information with the first CSI resource setting information and the second CSI resource setting information.

Step 2-1) The base station sends first CSI reporting setting information to the terminal, and the first CSI reporting setting information is used to indicate a first reporting quantity in CSI reported by the terminal, the first reporting quantity includes a preset candidate configuration parameter, and delay information and/or Doppler information

That is, the base station associates one CSI reporting setting information, i.e., the first CSI reporting setting information, with the first CSI resource setting information and the second CSI resource setting information, wherein a first reporting quantity in the reporting setting information includes, but is not limited to, {delay information, Doppler information} or {Doppler information}, that is, the first reporting quantity includes not only delay information and/or Doppler information, but also the preset candidate configuration parameter.

It should be noted that the preset candidate configuration parameter is a pre-configured parameter related to channel measurement.

Step 2-2) The base station sends the first CSI reporting setting information and the second CSI reporting setting information to the terminal, wherein the first CSI reporting setting information is used to indicate the first reporting quantity in the CSI reported by the terminal, the first reporting quantity includes delay information and/or Doppler information; the second CSI reporting setting information is used to indicate the second reporting quantity in the CSI reported by the terminal, the second reporting quantity includes the preset candidate configuration parameter. The first CSI resource setting information is associated with the first CSI reporting setting information, and the second CSI resource setting information is associated with the second CSI reporting setting information.

That is, the base station associates respective pieces of CSI reporting setting information with the first CSI resource setting information and the second CSI resource setting information.

The reporting quantity of one reporting setting information (the second CSI reporting setting information) is the preset candidate configuration parameter, such as {CRI-RI-PMI-CQI}, and the reporting quantity of the other CSI reporting setting information (the first CSI reporting setting information) is the delay information and/or the Doppler information, such as {delay information, Doppler information} or {Doppler information}.

It should be noted that the preset candidate configuration parameter is the pre-configured parameter related to the channel measurement.

Optionally, the base station associates and configures two pieces of reporting setting information (the first CSI reporting setting information and the second CSI reporting setting information) through the higher-layer signaling.

Step 3) The terminal receives the second CSI-RS used for channel measurement and the first CSI-RS used for time-frequency tracking respectively through the two pieces of CSI resource setting information sent by the base station;

Step 4) The terminal determines that the reporting quantity includes a preset candidate configuration parameter value, delay information and/or Doppler information through the CSI reporting setting information sent by the base station.

The CSI reporting setting information includes the first CSI reporting setting information and the second CSI reporting setting information. For example, if the preset candidate configuration parameter includes CRI-RI-PMI-CQI, the terminal determines that the CSI reporting quantity of the terminal includes the delay information and/or the Doppler information through the first reporting quantity in the first CSI reporting setting information; and determines that the CSI reporting quantity of the terminal includes cri-RI-PMI-CQI through the second reporting quantity in the second CSI reporting setting information.

Step 5) The terminal performs reception measurement on the second CSI-RS used for channel measurement and calculates the preset candidate configuration parameter value, e.g., the CRI-RI-PMI-CQI information.

Step 6) The terminal performs reception measurement on the first CSI-RS used for time-frequency tracking to obtain Doppler information and/or the delay of the delay path in the current channel transmission.

The specific calculation method for obtaining Doppler information and/or the delay of the delay path in the current channel transmission can refer to step 5) in the embodiment 1, which will not be further elaborated herein.

Step 7) The terminal reports the CSI through the first CSI reporting setting information, the second CSI reporting setting information and a CSI-RS measurement result sent by the base station, including K pieces of delay information and/or Doppler information, and preset candidate configuration parameter value.

The CSI-RS measurement results include the measurement results in steps 5) and 6).

In the embodiment, each of the number of delay information and the number of Doppler information is equal to K.

Optionally, K can be obtained through higher-layer signaling or a preset method.

It should be noted that the preset quantization mode for quantizing K pieces of delay information and/or Doppler information can refer to the description of the embodiment 1, which will not be further elaborated herein.

If the current codebook is set to be R16TypeII, the UE can first calculate the first-level precoding matrix W1, the second-level precoding matrix W2, and frequency-domain basis vector information based on the second CSI-RS used for channel measurement, wherein the number of the reported frequency-domain basis vectors is configured as M by the higher-layer signaling, and the terminal can represent M delay paths based on the M basis vectors in the calculated frequency-domain basis vectors.

Specifically, the M delay paths can be compared with the K delay paths estimated based on the PDP, and the M pieces of Doppler information corresponding to the M respectively can be calculated accordingly.

Optionally, when the number M of frequency-domain basis vectors in the PMI is less than K, the terminal reports Doppler information and/or the delay information of the K delay paths, wherein Doppler information and/or the delay information of first M delay paths are non-zero, and Doppler information and/or the delay information of $(M+1)^{th}$ delay path to Doppler information and/or the delay information of $K^{th}$ delay path are zero.

Optionally, the terminal performs differential feedback of the delay information and/or Doppler information based on the previous CSI.

Specifically, when a difference between the delay of each current delay path and the delay of the corresponding previous delay path is less than R1, and/or a difference between the Doppler frequency shift of each current delay path and the Doppler frequency shift of the corresponding previous delay path is less than R2, the delay and/or Doppler frequency shift is not reported at the current moment.

It should be noted that R1 and R2 are preset thresholds.

In the information transmission method according to the embodiment of the present disclosure, the terminal actively reports delay information and/or Doppler information to assist the base station in obtaining more accurate time-varying channel state information, thereby calculating the precoding information that better matches the current channel, and significantly optimizing transmission performance in medium-speed and high-speed scenarios.

As shown in Fig. 4, an embodiment of the present disclosure also provides a terminal, including: a memory 420, a transceiver 400, and a processor 410; wherein the memory 420 is configured to store a program instruction; the transceiver 400 is configured to receive and send data under the control of the processor 410; the processor 410 is configured to read the program instruction in the memory 420 and the transceiver 400 is configured to perform the following operations:

receiving at least one Channel State Information (CSI) resource setting information and at least one CSI reporting setting information sent by a network side device, wherein the at least one CSI resource setting information includes first CSI resource setting information, the first CSI resource setting information includes configuration information of a first CSI-Reference Signal (CSI-RS) used for time-frequency tracking; the at least one CSI reporting setting information includes first CSI reporting setting information, the first CSI reporting setting information is used to indicate a first reporting quantity in CSI reported by the terminal, the first reporting quantity includes delay information and/or Doppler information;

receiving the first CSI-RS based on the first CSI resource setting information;

sending CSI to the network side device based on the first CSI reporting setting information, the CSI including K1 pieces of delay information and/or K2 pieces of Doppler information, where K1 and K2 are each a positive integer greater than or equal to 1.

In Fig. 4, the bus architecture may include any number of interconnected buses and bridges, and connects various circuits including one or more processors represented by the processor 410 and the memory represented by the memory 420. The bus architecture can also link together various other circuits such as peripherals, voltage regulators, and power management circuits, which are all well known in the art and therefore will not be described further herein. The bus interface provides the interface. The transceiver 400 may be a plurality of elements, including a transmitter and a receiver, to allow for communication with various other apparatuses on the transmission medium. The transmission medium includes wireless channels, wired channels, optical cables, and other transmission media. For different user equipments, the user interface 440 can also be an interface capable of externally or internally connecting a required device. The connected device includes but is not limited to a keypad, a display, a speaker, a microphone, a joystick, etc.

The processor 410 is responsible for managing the bus architecture and general processing, and the memory 420 can store data used by the processor 410 when performing operations.

Optionally, the processor 410 may be a Central Processing Unit (CPU), an Application Specific Integrated Circuit (ASIC), a Field Programmable Gate Array (FPGA) or Complex Programmable Logic Device (CPLD). The processor 410 can also adopt a multi-core architecture.

By calling the program instruction stored in the memory, the processor 410 is configured to perform any of the methods provided by the embodiments of the present application according to the obtained executable instruction. The processor 410 and the memory 420 can also be physically separated.

Optionally, the first CSI resource setting information includes S resource sets, each of the resource sets includes Y pieces of configuration information of the first CSI-RS, where S is a positive integer greater than or equal to 1, and Y is a positive integer greater than or equal to 1;

the first CSI resource setting information is associated with the first CSI reporting setting information.

Optionally, the first CSI resource setting information further includes configuration information of a second CSI-RS used for channel measurement;

wherein the first CSI resource setting information is associated with the first CSI reporting setting information, and the first reporting quantity further includes a preset candidate configuration parameter; or

the at least one CSI reporting setting information further includes second CSI reporting setting information, the first CSI resource setting information is associated with the first CSI reporting setting information and the second CSI reporting setting information, the second CSI reporting setting information is used to indicate a second reporting quantity in the CSI reported by the terminal, and the second reporting quantity includes a preset candidate configuration parameter.

Optionally, the first CSI resource setting information includes P resource sets, each of the resource sets includes X pieces of configuration information of the second CSI-RS and Z pieces of configuration information of the first CSI-RS, where P, X, and Z are each a positive integer greater than or equal to 1; or

the first CSI resource setting information includes Q resource sets, wherein each of Q1 resource sets includes E pieces of configuration information of the second CSI-RS, and each of Q2 resource sets includes F pieces of configuration information of the first CSI-RS, where Q is a positive integer greater than or equal to 2, Q = Q1 + Q2, where Q1, Q2, E, and F are each a positive integer greater than or equal to 1.

Optionally, the transceiver 400 is further configured to:

receive first pairing signaling sent by the network side device when the first CSI resource setting information includes Q resource sets, the first pairing signaling is used to indicate two associated paired resource sets, wherein a first one of the associated paired resource sets is indicated to be used for the channel measurement, and a second one of the associated paired resource sets is indicated to be used for the time-frequency tracking.

Optionally, the at least one CSI resource setting information further includes second CSI resource setting information, and the second CSI resource setting information includes configuration information of the second CSI-RS used for channel measurement;

wherein the second CSI resource setting information and the first CSI resource setting information are associated with the first CSI reporting setting information, and the first reporting quantity further includes a preset candidate configuration parameter; or

the at least one CSI reporting setting information further includes second CSI reporting setting information, the second CSI resource setting information is associated with the second CSI reporting setting information, the first CSI resource setting information is associated with the first CSI reporting setting information, and the second CSI reporting setting information includes the second reporting quantity used for instructing the terminal to report the CSI, and the second reporting quantity includes the preset candidate configuration parameter.

Optionally, the transceiver 400 is further configured to:

receive second pairing signaling sent by the network side device, wherein the second pairing signaling is used to indicate two associated paired resource sets, the two associated paired resource sets are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.

Optionally, the transceiver 400 is further configured to:

send K1 pieces of quantized delay information to the network side device through a preset first quantization mode; and/or

send K2 pieces of quantized Doppler information to the network side device through a preset second quantization mode.

Optionally, the transceiver 400 is further configured to:

when the first reporting quantity includes delay information and K1=1, send the delay information of a strongest delay path to the network side device;

when the first reporting quantity includes delay information and K1 > 1, send the delay information of K1 delay paths to the network side device according to a first preset priority rule;

when the first reporting quantity includes Doppler information and K2 = 1, send the Doppler information of the strongest delay path to the network side device;

when the first reporting quantity includes Doppler information and K2 > 1, send the Doppler information of K2 delay paths to the network side device according to a second preset priority rule.

Optionally, when the preset candidate configuration parameter includes a Precoding Matrix Indicator (PMI), and the number M of frequency-domain basis vectors in the PMI is less than K1, first M pieces of delay information in the K1 pieces of delay information are non-zero, and $(M+1)^{th}$ delay information to $K1^{th}$ delay information are zero;
when the preset candidate configuration parameter includes the PMI, and the number M of frequency-domain basis vectors in the PMI is less than K2, first M pieces of Doppler information in the K2 pieces of Doppler information are non-zero, and $(M+1)^{th}$ Doppler information to K2th Doppler information are zero.

Optionally, when the first reporting quantity includes the Doppler information, the Doppler information includes at least one of the followings:

first Doppler information, wherein the first Doppler information is Doppler frequency shift;
second Doppler information, wherein the second Doppler information represents a first Doppler variation caused by acceleration of relative motion between the terminal and the network side device; or
third Doppler information, wherein the third Doppler information represents a second Doppler variation between a current report and a previous report.

Optionally, when the first reporting quantity includes the second Doppler information, the first CSI reporting setting information further includes a first threshold value;
the processor 410 is further configured to:

when the first Doppler variation in a measurement result obtained by measuring the received first CSI-RS is less than the first threshold value, set as null a field corresponding to the second Doppler information in the CSI to be sent;
when the first Doppler variation in the measurement result obtained by measuring the received first CSI-RS is greater than or equal to the first threshold value, set as the first Doppler variation the field corresponding to the second Doppler information in the CSI to be sent.

Optionally, when the first reporting quantity includes the third Doppler information, the first CSI reporting setting information further includes a second threshold value;
the processor 410 is further configured to:

when the second Doppler variation in a measurement result obtained by measuring the received first CSI-RS is less than the second threshold value, set as null a field corresponding to target Doppler information in the CSI to be sent;
when the second Doppler variation in the measurement result obtained by measuring the received first CSI-RS is greater than or equal to the second threshold value, set as the target Doppler information the field corresponding to the target Doppler information in the CSI to be sent, wherein the target Doppler information is the first Doppler information, the second Doppler information, or the third Doppler information.

Optionally, when the first reporting quantity includes the Doppler information, and the Doppler information is Doppler frequency shift, the CSI includes the Doppler frequency shift corresponding to a first delay path and a Doppler frequency shift difference between each of the delay paths in subsequent K2-1 delay paths and the first delay path;
when the first reporting quantity includes delay information, and the delay information is an absolute delay value of the delay path, the CSI includes the absolute delay value of the first delay path and a difference between the absolute delay value of each of the delay paths in the subsequent K1-1 delay paths and the absolute delay value of the first delay path.

In the embodiments of the present disclosure, the terminal actively reports the delay information and/or the Doppler information through the CSI based on the first CSI reporting setting information configured by the network side device, thereby assisting the network side device in obtaining more accurate time-varying channel state information and improving channel transmission performance

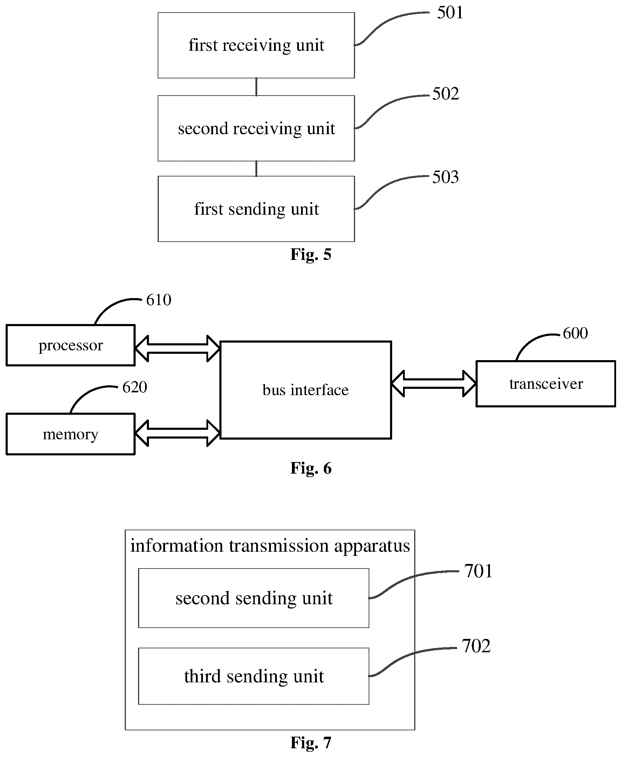

As shown in Fig. 5, an embodiment of the present disclosure also provides an information transmission apparatus, including:

a first receiving unit 501, configured to receive at least one Channel State Information (CSI) resource setting information and at least one CSI reporting setting information sent by a network side device, wherein the at least one CSI resource setting information includes first CSI resource setting information, the first CSI resource setting information includes configuration information of a first CSI-Reference Signal (CSI-RS) used for time-frequency tracking; the at least one CSI reporting setting information includes first CSI reporting setting information, the first CSI reporting setting information is used to indicate a first reporting quantity in CSI reported by the terminal, the first reporting quantity includes delay information and/or Doppler information;
a second receiving unit 502, configured to receive the first CSI-RS based on the first CSI resource setting information;
a first sending unit 503, configured to send the CSI to the network side device based on the first CSI reporting setting information, the CSI including K1 pieces of delay information and/or K2 pieces of Doppler information, where K1 and K2 are each a positive integer greater than or equal to 1.

Optionally, the first CSI resource setting information includes S resource sets, each of the resource sets includes Y pieces of configuration information of the first CSI-RS, where S is a positive integer greater than or equal to 1, and Y is a positive integer greater than or equal to 1;
the first CSI resource setting information is associated with the first CSI reporting setting information.
Optionally, the first CSI resource setting information further includes configuration information of a second CSI-RS used for channel measurement;

wherein the first CSI resource setting information is associated with the first CSI reporting setting information, and the first reporting quantity further includes a preset candidate configuration parameter; or
the at least one CSI reporting setting information further includes second CSI reporting setting information, the first CSI resource setting information is associated with the first CSI reporting setting information and the second CSI reporting setting information, the second CSI reporting setting information is used to indicate a second reporting quantity in the CSI reported by the terminal, and the second reporting quantity includes the preset candidate configuration parameter.

Optionally, the first CSI resource setting information includes P resource sets, each of the resource sets includes X pieces of configuration information of the second CSI-RS and Z pieces of configuration information of the first CSI-RS, where P, X, and Z are each a positive integer greater than or equal to 1; or
the first CSI resource setting information includes Q resource sets, wherein each of Q1 resource sets includes E pieces of configuration information of the second CSI-RS, and each of Q2 resource sets includes F pieces of configuration information of the first CSI-RS, where Q is a positive integer greater than or equal to 2, Q = Q1 + Q2, where Q1, Q2, E, and F are each a positive integer greater than or equal to 1.
Optionally, in the case that the first CSI resource setting information includes Q resource sets, the apparatus of the embodiment of the present disclosure further includes:
a third receiving unit, configured to receive first pairing signaling sent by the network side device, the first pairing signaling is used to indicate two associated paired resource sets, wherein a first one of the associated paired resource sets is indicated to be used for the channel measurement, and a second one of the associated paired resource sets is indicated to be used for the time-frequency tracking.
Optionally, the at least one CSI resource setting information further includes second CSI resource setting information, and the second CSI resource setting information includes configuration information of the second CSI-RS used for channel measurement;

wherein the second CSI resource setting information and the first CSI resource setting information are associated with the first CSI reporting setting information, and the first reporting quantity further includes a preset candidate configuration parameter; or
the at least one CSI reporting setting information further includes second CSI reporting setting information, the second CSI resource setting information is associated with the second CSI reporting setting information, the first CSI resource setting information is associated with the first CSI reporting setting information, and the second CSI reporting setting information includes the second reporting quantity used for instructing the terminal to report the CSI, and the second reporting quantity including the preset candidate configuration parameter.

Optionally, the apparatus of the embodiment of the present disclosure further includes:
a fourth receiving unit, configured to receive second pairing signaling sent by the network side device, wherein the second pairing signaling is used to indicate two associated paired resource sets, the two associated paired resource sets are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.
Optionally, the first sending unit 503 is configured for at least one of the followings:

sending K1 pieces of quantized delay information to the network side device through a preset first quantization mode; or
sending K2 pieces of quantized Doppler information to the network side device through a preset second quantization mode.

Optionally, the first sending unit 503 is specifically configured to:

when the first reporting quantity includes delay information and K1=1, send the delay information of a strongest delay path to the network side device;

when the first reporting quantity includes delay information and K1 > 1, send the delay information of K1 delay paths to the network side device according to a first preset priority rule;

when the first reporting quantity includes Doppler information and K2 = 1, send the Doppler information of the strongest delay path to the network side device;

when the first reporting quantity includes Doppler information and K2 > 1, send the Doppler information of K2 delay paths to the network side device according to a second preset priority rule.

Optionally, when the preset candidate configuration parameter includes a Precoding Matrix Indicator (PMI), and the number M of frequency-domain basis vectors in the PMI is less than K1, first M pieces of delay information in the K1 pieces of delay information are non-zero, and $(M+1)^{th}$ delay information to $K1^{th}$ delay information are zero;

when the preset candidate configuration parameter includes the PMI, and the number M of frequency-domain basis vectors in the PMI is less than K2, first M pieces of Doppler information in the K2 pieces of Doppler information are non-zero, and $(M+1)^{th}$ Doppler information to $K2^{th}$ Doppler information are zero.

Optionally, when the first reporting quantity includes the Doppler information, the Doppler information includes at least one of the followings:

first Doppler information, wherein the first Doppler information is Doppler frequency shift;

second Doppler information, wherein the second Doppler information represents a first Doppler variation caused by acceleration of relative motion between the terminal and the network side device; or

third Doppler information, wherein the third Doppler information represents a second Doppler variation between a current report and a previous report.

Optionally, when the first reporting quantity includes the second Doppler information, the first CSI reporting setting information further includes a first threshold value; correspondingly, the apparatus of the embodiment of the present disclosure further includes:

a first processing unit, configured to set as null a field corresponding to the second Doppler information in the CSI to be sent in the case that the first Doppler variation in a measurement result obtained by measuring the received first CSI-RS is less than the first threshold value;

a second processing unit, configured to set as the first Doppler variation the field corresponding to the second Doppler information in the CSI to be sent in the case that the first Doppler variation in the measurement result obtained by measuring the received first CSI-RS is greater than or equal to the first threshold value.

Optionally, when the first reporting quantity includes the third Doppler information, the first CSI reporting setting information further includes a second threshold value; correspondingly, the apparatus of the embodiment of the present disclosure further includes:

a third processing unit, configured to set as null a field corresponding to target Doppler information in the CSI to be sent in the case that the second Doppler variation in a measurement result obtained by measuring the received first CSI-RS is less than the second threshold value;

a fourth processing unit, configured to set as the target Doppler information the field corresponding to the target Doppler information in the CSI to be sent in the case that the second Doppler variation in a measurement result obtained by measuring the received first CSI-RS is greater than or equal to the second threshold value, wherein the target Doppler information is the first Doppler information, the second Doppler information, or the third Doppler information.

Optionally, when the first reporting quantity includes the Doppler information, and the Doppler information is Doppler frequency shift, the CSI includes the Doppler frequency shift corresponding to a first delay path and a Doppler frequency shift difference between each of the delay paths in subsequent K2-1 delay paths and the first delay path;

when the first reporting quantity includes delay information and the delay information is an absolute delay value of the delay path, the CSI includes the absolute delay value of the first delay path and a difference between the absolute delay value of each of the delay paths in the subsequent K1-1 delay paths and the absolute delay value of the first delay path.

The information transmission apparatus of the embodiment of the present disclosure actively reports delay information and/or Doppler information through CSI based on the first CSI reporting setting information configured by the network side device, thereby assisting the network side device to obtain more accurate time-varying channel state information and improve channel transmission performance.

It should be noted that the division of units in the embodiments of the present application is schematic and is only a logical function division. In actual implementation, there may be other division methods. In addition, each functional unit in various embodiments of the present application may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the related art, of the technical solution of the present application may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present application. The aforementioned storage media include: USB flash disk, removable hard disk, Read-Only Memory (ROM), Random Access Memory (RAM), magnetic disk or optical disc and other media that can store program code.

It should be noted herein that the above-mentioned apparatus provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

In some embodiments of the present disclosure, a processor-readable storage medium is also provided, wherein the processor-readable storage medium stores a program instruction, and the program instruction is used to cause the processor to execute the following steps:

receiving at least one Channel State Information (CSI) resource setting information and at least one CSI reporting setting information sent by a network side device, wherein the at least one CSI resource setting information includes first CSI resource setting information, the first CSI resource setting information includes configuration information of a first CSI-Reference Signal (CSI-RS) used for time-frequency tracking; the at least one CSI reporting setting information includes first CSI reporting setting information, the first CSI reporting setting information is used to indicate a first reporting quantity in CSI reported by the terminal, the first reporting quantity includes delay information and/or Doppler information;
receiving the first CSI-RS based on the first CSI resource setting information;
sending CSI to the network side device based on the first CSI reporting setting information, the CSI including K1 pieces of delay information and/or K2 pieces of Doppler information, where K1 and K2 are each a positive integer greater than or equal to 1.

When the program is executed by the processor, all implementation methods of the method embodiment applied to the terminal side as shown in Fig. 3 can be implemented. To avoid repetition, it will not be elaborated herein.

As shown in Fig. 6, the embodiment of the present disclosure also provides a network side device, including: a memory 620, a transceiver 600, and a processor 610; wherein the memory 620 is configured to store a computer program; the transceiver 600 is configured to receive and send data under the control of the processor 610; the processor 610 is configured to read the computer program in the memory 620 and perform the following operations:

sending at least one Channel State Information (CSI) resource setting information to a terminal, wherein the at least one CSI resource setting information includes first CSI resource setting information, the first CSI resource setting information includes configuration information of a first CSI-Reference Signal (CSI-RS) used for time-frequency tracking;
sending at least one CSI reporting setting information to the terminal, wherein the at least one CSI reporting setting information includes first CSI reporting setting information, the first CSI reporting setting information is used to indicate a first reporting quantity in CSI reported by the terminal, and the first reporting quantity includes delay information and/or Doppler information.

In Fig. 6, the bus architecture may include any number of interconnected buses and bridges, and connects various circuits including one or more processors represented by the processor 610 and the memory represented by the memory 620. The bus architecture can also link together various other circuits such as peripherals, voltage regulators, and power management circuits, which are all well known in the art and therefore will not be described further herein. The bus interface provides the interface. The transceiver 600 may be a plurality of elements, including a transmitter and a receiver, to allow for communication with various other apparatuses on the transmission medium. The transmission medium includes wireless channels, wired channels, optical cables, and other transmission media. The processor 610 is responsible for managing the bus architecture and general processing, and the memory 620 can store data used by the processor 610 when performing operations.

The processor 610 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

Optionally, the first CSI resource setting information includes S resource sets, each of the resource sets includes Y pieces of configuration information of the first CSI-RS, where S is a positive integer greater than or equal to 1, and Y is a positive integer greater than or equal to 1;
the first CSI resource setting information is associated with the first CSI reporting setting information.

Optionally, the first CSI resource setting information further includes configuration information of a second CSI-RS used for channel measurement;

wherein the first CSI resource setting information is associated with the first CSI reporting setting information, and the first reporting quantity further includes a preset candidate configuration parameter; or
the at least one CSI reporting setting information further includes second CSI reporting setting information, the first CSI resource setting information is associated with the first CSI reporting setting information and the second CSI reporting setting information, the second CSI reporting setting information is used to indicate a second reporting quantity in the CSI reported by the terminal, and the second reporting quantity includes a preset candidate configuration parameter.

Optionally, the first CSI resource setting information includes P resource sets, each of the resource sets includes X pieces of configuration information of the second CSI-RS and Z pieces of configuration information of the first CSI-RS, where P, X, and Z are each a positive integer greater than or equal to 1; or
the first CSI resource setting information includes Q resource sets, wherein each of Q1 resource sets includes E pieces of configuration information of the second CSI-RS, and each of Q2 resource sets includes F pieces of configuration information of the first CSI-RS, where Q is a positive integer greater than or equal to 2, Q = Q1 + Q2, where Q1, Q2, E, and F are each a positive integer greater than or equal to 1.

Optionally, the transceiver 600 is further configured to:
in the case that the first CSI resource setting information includes Q resource sets, send first pairing signaling to the terminal, the first pairing signaling is used to indicate two associated paired resource sets, wherein a first one of the associated paired resource sets is indicated to be used for the channel measurement, and a second one of the associated paired resource sets is indicated to be used for the time-frequency tracking.

Optionally, the at least one CSI resource setting information further includes second CSI resource setting information, and the second CSI resource setting information includes configuration information of the second CSI-RS used for channel measurement;

wherein the second CSI resource setting information and the first CSI resource setting information are associated with the first CSI reporting setting information, and the first reporting quantity further includes a preset candidate configuration parameter; or
the at least one CSI reporting setting information further includes second CSI reporting setting information, the second CSI resource setting information is associated with the second CSI reporting setting information, the first CSI resource setting information is associated with the first CSI reporting setting information, and the second CSI reporting setting information includes the second reporting quantity used for instructing the terminal to report the CSI, and the second reporting quantity includes the preset candidate configuration parameter.

Optionally, the transceiver 600 is further configured to:
send second pairing signaling to the terminal, wherein the second pairing signaling is used to indicate two associated paired resource sets, the two associated paired resource sets are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.

The network side device of the embodiment of the present disclosure provides a basis for the terminal to actively report delay information and/or Doppler information to the network side device, thereby obtaining more accurate time-varying channel state information and improving channel transmission performance.

As shown in Fig. 7, the embodiment of the present disclosure also provides an information transmission apparatus, including:

a second sending unit 701, configured to send at least one Channel State Information (CSI) resource setting information to a terminal, wherein the at least one CSI resource setting information includes first CSI resource setting information, the first CSI resource setting information includes configuration information of a first CSI-Reference Signal (CSI-RS) used for time-frequency tracking;

a third sending unit 702, configured to send at least one CSI reporting setting information to the terminal, wherein the at least one CSI reporting setting information includes first CSI reporting setting information, the first CSI reporting setting information is used to indicate a first reporting quantity in CSI reported by the terminal, and the first reporting quantity includes delay information and/or Doppler information.

Optionally, the first CSI resource setting information includes S resource sets, each of the resource sets includes Y pieces of configuration information of the first CSI-RS, where S is a positive integer greater than or equal to 1, and Y is a positive integer greater than or equal to 1;

the first CSI resource setting information is associated with the first CSI reporting setting information.

Optionally, the first CSI resource setting information further includes configuration information of a second CSI-RS used for channel measurement;

the first CSI resource setting information is associated with the first CSI reporting setting information, and the first reporting quantity further includes a preset candidate configuration parameter; or

the at least one CSI reporting setting information further includes second CSI reporting setting information, and the first CSI resource setting information is associated with the first CSI reporting setting information and the second CSI reporting setting information, the second CSI reporting setting information is used to indicate a second reporting quantity in the CSI reported by the terminal, and the second reporting quantity includes the preset candidate configuration parameter.

Optionally, the first CSI resource setting information includes P resource sets, each of the resource sets includes X pieces of configuration information of the second CSI-RS and Z pieces of configuration information of the first CSI-RS, where P, X, and Z are each a positive integer greater than or equal to 1; or

the first CSI resource setting information includes Q resource sets, wherein each of the Q1 resource sets includes E pieces of configuration information of the second CSI-RS, and each of the Q2 resource sets includes F pieces of configuration information of the first CSI-RS, where Q is a positive integer greater than or equal to 2, Q = Q1 + Q2, where Q1, Q2, E, and F are each a positive integer greater than or equal to 1.

Optionally, in the case that the first CSI resource setting information includes Q resource sets, the apparatus of the embodiment of the present disclosure further includes:

a fourth sending unit, configured to send first pairing signaling to the terminal, the first pairing signaling is used to indicate two associated paired resource sets, wherein a first one of the associated paired resource sets is indicated to be used for the channel measurement, and a second one of the associated paired resource sets is indicated to be used for the time-frequency tracking.

Optionally, the at least one CSI resource setting information further includes second CSI resource setting information, the second CSI resource setting information includes configuration information of the second CSI-RS used for channel measurement;

wherein the second CSI resource setting information and the first CSI resource setting information are associated with the first CSI reporting setting information, and the first reporting quantity further includes a preset candidate configuration parameter; or

the at least one CSI reporting setting information further includes second CSI reporting setting information, and the second CSI resource setting information is associated with the second CSI reporting setting information, the first CSI resource setting information is associated with the first CSI reporting setting information, the second CSI reporting setting information includes a second reporting quantity used for instructing the terminal to report CSI, and the second reporting quantity includes the preset candidate configuration parameter.

Optionally, the apparatus of the embodiment of the present disclosure further includes:

a fifth sending unit, configured to send second pairing signaling to the terminal, wherein the second pairing signaling is used to indicate two associated paired resource sets that are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.

The information transmission apparatus of the embodiment of the present disclosure provides support for the terminal to actively report delay information and/or Doppler information to the network side device, thereby obtaining more accurate time-varying channel state information and improving channel transmission performance.

It should be noted that the division of units in the embodiments of the present application is schematic and is only a logical function division. In actual implementation, there may be other division methods. In addition, each functional unit in various embodiments of the present application may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the related art, of the technical solution of the present application may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present application. The aforementioned storage media include: U disk, removable hard disk, Read-Only Memory (ROM), Random Access Memory (RAM), magnetic disk or optical disc and other media that can store program code.

It should be noted here that the above-mentioned apparatus provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

In some embodiments of the present disclosure, a processor-readable storage medium is also provided, wherein the processor-readable storage medium stores a program instruction, and the program instruction is configured to cause the processor to execute the following steps:

sending at least one Channel State Information (CSI) resource setting information to a terminal, wherein the at least one CSI resource setting information includes first CSI resource setting information, the first CSI resource setting information includes configuration information of a first CSI-Reference Signal (CSI-RS) used for time-frequency tracking;

sending at least one CSI reporting setting information to the terminal, wherein the at least one CSI reporting setting information includes first CSI reporting setting information, the first CSI reporting setting information is used to indicate a first reporting quantity in CSI reported by the terminal, and the first reporting quantity includes delay information and/or Doppler information.

When the program is executed by the processor, it can implement all the implementation methods of the method embodiment applied to the side of the network side device as shown in Fig. 2. To avoid redundancy, further details will not be repeated herein.

The technical solutions provided by the embodiments of the present application can be applied to a variety of systems, especially 5G systems. For example, applicable systems may be Global System of Mobile communication (GSM) system, Code Division Multiple Access (CDMA) system, Wideband Code Division Multiple Access (WCDMA), General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave access (WiMAX) system, fifth Generation mobile communication (5th-Generation, 5G) New Radio (NR) system, etc. These various systems each include a terminal device and a network device. The system can also include a core network part, such as the evolved packet system (EPS), and 5G System (5GS), etc.

The terminal involved in the embodiments of the present application may be a device that provides voice and/or data connectivity to users, a handheld device with a wireless connection function, or other processing devices connected to a wireless modem, etc. In different systems, the names of terminal device may also be different. For example, in a 5G system, the terminal device may be called User Equipment (UE). A wireless terminal device can communicate with one or more Core Networks (CNs) via a Radio Access Network (RAN). The wireless terminal device can be a mobile terminal device, such as a mobile phone (also known as a "cell phone") and a computer with a mobile terminal device, which may be, for example, portable, pocket-sized, handheld, computer-built-in or vehicle-mounted mobile devices, which exchange audio and/or data with a radio access network. For example, Personal Communication Service (PCS) phones, cordless phones, Session Initiated Protocol (SIP) phones, Wireless Local Loop (WLL) stations, Personal Digital Assistants (PDAs) and other devices. A wireless terminal device may also be called a system, a subscriber unit, a subscriber station, a mobile station, a mobile, a remote station, an access point, a remote terminal, access terminal, a user terminal, a user agent, or a user device, which is not limited in the embodiments of the present application.

The network side device involved in the embodiments of the present application may be a base station, and the base station may include multiple cells that provide services to terminals. Depending on the specific application, a base station can also be called an access point, or it can be a device in the access network that communicates with wireless terminal devices through one or more sectors on the air interface, or it can be named by another name. A network side device can be used to exchange received radio frames with Internet Protocol (IP) packets and act as a router between the wireless terminal device and the rest of the access network, wherein the rest of the access network can include the IP communications network. Network devices may also coordinate attribute management of the air interface. For example, the network side device involved in the embodiments of the present application may be a network side device (Base Transceiver Station, BTS) in Global System for Mobile communications (GSM) or Code Division Multiple Access (CDMA) system, or it can be a network side device (NodeB) in a Wide-band Code Division Multiple Access (WCDMA) system, or an evolved Node B (eNB or e-NodeB) in a Long Term Evolution (LTE) system, a 5G base station (gNB) in a 5G network architecture (next generation system), or a Home evolved base station (Home evolved Node B, HeNB), a relay node, a femto, a pico, etc., which are not limited in the embodiments of the present application. In some network structures, the network side device may include a Centralized Unit (CU) node and Distributed Unit (DU) nodes, and the centralized unit and the distributed units may also be arranged geographically separately.

The network side device and the terminal device may each perform Multi-Input Multi-Output (MIMO) transmission with each other by using one or more antennas. The MIMO transmission may be Single User MIMO (SU-MIMO) or Multiple User MIMO (MU-MIMO). According to the configuration and quantity of antenna combinations, the MIMO transmission may be two Dimensional-MIMO (2D-MIMO), three Dimensional-MIMO (3D-MIMO), Full Dimensional-MIMO (FD-MIMO) or massive-MIMO, and may be diversity transmission, precoded transmission, beam forming transmission, or the like.

Those skilled in the art will appreciate that embodiments of the present application may be provided as methods, systems, or computer program products. Accordingly, the present disclosure may take the form of an entirely hardware embodiment, an entirely software embodiment, or an embodiment that combines software and hardware aspects. Furthermore, the present application may take the form of a computer program product embodied on one or more computer-usable storage media (including, but not limited to, magnetic disk storage, optical storage, and the like) including computer-usable program codes.

The present application has been described with reference to flow diagrams and/or block diagrams of methods, devices (systems), and computer program products according to embodiments of the present application. It will be understood that each flow and/or block of the flow diagrams and/or block diagrams, and combinations of flows and/or blocks in the flow diagrams and/or block diagrams, can be implemented by computer executable instructions. These computer executable instructions may be provided to a processor of a general purpose computer, special purpose computer, embedded processor, or other programmable data processing device to produce a machine, such that the instructions, which are executed via the processor of the computer or other programmable data processing device, create means for implementing the functions specified in the flow diagram flow or flows and/or block diagram block or blocks.

These processor executable instructions may also be stored in a processor-readable storage that can direct a computer or other programmable data processing device to function in a particular manner, such that the instructions stored in the processor-readable storage produce an article of manufacture including instruction means which implement the function specified in the flow diagram flow or flows and/or block diagram block or blocks.

The processor executable instructions may also be loaded onto a computer or other programmable data processing device to cause a series of operational steps to be performed on the computer or other programmable device to produce a computer-implemented process, such that the instructions which are executed on the computer or other programmable device provide steps for implementing the functions specified in the flow diagram flow or flows and/or block diagram block or blocks.

Obviously, those skilled in the art can make various changes and modifications to the present application without departing from the spirit and scope of the application. In this way, if these modifications and variations of the present application fall within the scope of the claims of the present application and equivalent thereof, the present application is also intended to include these modifications and variations.

It should be understood that the division of each module above is only a division of logical functions. In actual implementation, it can be fully or partially integrated into one physical entity, or it can also be physically separated. These modules can all be implemented in the form of software called by processing elements; they can also all be implemented in the form of hardware; or some modules can be implemented in the form of software called by processing elements, and some modules can be implemented in the form of hardware. For example, a certain module can be a separate processing element, or it can be integrated and implemented in a chip of the above-mentioned device. In addition, it can also be stored in the memory of the above-mentioned apparatus in the form of program codes, and called by a processing element of the above-mentioned apparatus to execute the functions of the modules identified above. The implementation of other modules is similar. In addition, all or part of these modules can be integrated together or implemented independently. The processing element described here may be an integrated circuit with signal processing capabilities. During the implementation process, each step of the above method or each of the above modules can be accomplished by integrated logic circuits in the form of hardware or instructions in the form of software in the processor element.

For example, each module, unit, sub-unit or sub-module may be one or more integrated circuits configured to implement the above method, such as: one or more Application Specific Integrated Circuits (ASICs), or, one or more microprocessors (Digital Signal Processor, DSP), or one or more Field Programmable Gate Arrays (FPGAs). For another example, when one of the above modules is implemented in the form of a processing element calling program codes, the processing element can be a general-purpose processor, such as a Central Processing Unit (CPU) or other processors that can call the program codes. For another example, these modules can be integrated together and implemented in the form of a System-On-A-Chip (SOC).

Terms "first", "second" and the like in the specification and claims of this disclosure are adopted not to describe a specific sequence or order but to distinguish similar objects. It should be understood that data used like this may be interchanged under a proper condition for implementation of the embodiments of the disclosure described here in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic in the process, the method, the product or the equipment. In addition, the use of "and/or" in the specification and claims indicates at least one of the connected objects, for example, A and/or B and/or C indicates the inclusion of 7 situations, namely, A alone, B alone, C alone, both A and B exist, both B and C exist, both A and C exist, and A, B, and C all exist. Similarly, the use of "at least one of A or B" in the specification and claims should be understood to mean "A alone, B alone, or both A and B exist."

The embodiments of the present disclosure are described above in conjunction with the accompanying drawings, but the present disclosure is not limited to the above-mentioned detailed descriptions. The detailed descriptions are merely illustrative and not restrictive. Under the teaching of the present disclosure, those ordinary skill in the art can also make various forms without departing from the spirit and the scope of protection of the claims of the present disclosure, all of which fall within the protection of the present disclosure.

**Claims**

1. An information transmission method, performed by a terminal, comprising:

   receiving at least one Channel State Information (CSI) resource setting information and at least one CSI reporting setting information sent by a network side device, wherein the at least one CSI resource setting information comprises first CSI resource setting information, the first CSI resource setting information comprises configuration information of a first CSI-Reference Signal (CSI-RS) used for time-frequency tracking; the at least one CSI reporting setting information comprises first CSI reporting setting information, the first CSI reporting setting information is used to indicate a first reporting quantity in CSI reported by the terminal, the first reporting quantity comprises delay information and/or Doppler information;
   receiving the first CSI-RS based on the first CSI resource setting information;
   sending CSI to the network side device based on the first CSI reporting setting information, wherein the CSI comprises K1 pieces of delay information and/or K2 pieces of Doppler information, where K1 and K2 are each a positive integer greater than or equal to 1.

2. The method according to claim 1, wherein the first CSI resource setting information comprises S resource sets, each of the resource sets comprises Y pieces of configuration information of the first CSI-RS, where S is a positive integer greater than or equal to 1, and Y is a positive integer greater than or equal to 1;
   the first CSI resource setting information is associated with the first CSI reporting setting information.

3. The method according to claim 1, wherein the first CSI resource setting information further comprises configuration information of a second CSI-RS used for channel measurement;

   wherein the first CSI resource setting information is associated with the first CSI reporting setting information, and the first reporting quantity further comprises a preset candidate configuration parameter; or
   the at least one CSI reporting setting information further comprises second CSI reporting setting information, the first CSI resource setting information is associated with the first CSI reporting setting information and the second CSI reporting setting information, the second CSI reporting setting information is used to indicate a second reporting quantity in the CSI reported by the terminal, and the second reporting quantity comprises a preset candidate configuration parameter.

4. The method according to claim 3, wherein the first CSI resource setting information comprises P resource sets, each of the resource sets comprises X pieces of configuration information of the second CSI-RS and Z pieces of configuration information of the first CSI-RS, where P, X, and Z are each a positive integer greater than or equal to 1; or
   the first CSI resource setting information comprises Q resource sets, wherein each of Q1 resource sets comprises E pieces of configuration information of the second CSI-RS, and each of Q2 resource sets comprises F pieces of configuration information of the first CSI-RS, where Q is a positive integer greater than or equal to 2, Q = Q1 + Q2, where Q1, Q2, E, and F are each a positive integer greater than or equal to 1.

5. The method according to claim 4, wherein in the case that the first CSI resource setting information comprises Q resource sets, the method further comprises:
receiving first pairing signaling sent by the network side device, the first pairing signaling is used to indicate two associated paired resource sets, wherein a first one of the associated paired resource sets is indicated to be used for the channel measurement, and a second one of the associated paired resource sets is indicated to be used for the time-frequency tracking.

6. The method according to claim 1, wherein the at least one CSI resource setting information further comprises second CSI resource setting information, and the second CSI resource setting information comprises configuration information of the second CSI-RS used for channel measurement;

wherein the second CSI resource setting information and the first CSI resource setting information are associated with the first CSI reporting setting information, and the first reporting quantity further comprises a preset candidate configuration parameter; or
the at least one CSI reporting setting information further comprises second CSI reporting setting information, the second CSI resource setting information is associated with the second CSI reporting setting information, the first CSI resource setting information is associated with the first CSI reporting setting information, and the second CSI reporting setting information comprises the second reporting quantity used for instructing the terminal to report the CSI, and the second reporting quantity comprises the preset candidate configuration parameter.

7. The method according to claim 6, further comprising:
receiving second pairing signaling sent by the network side device, wherein the second pairing signaling is used to indicate two associated paired resource sets, the two associated paired resource sets are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.

8. The method according to claim 1, wherein sending the CSI to the network side device comprises at least one of the following steps:

sending K1 pieces of quantized delay information to the network side device through a preset first quantization mode; or
sending K2 pieces of quantized Doppler information to the network side device through a preset second quantization mode.

9. The method according to claim 1, wherein sending the CSI to the network side device comprises:

when the first reporting quantity comprises delay information and K1=1, sending the delay information of a strongest delay path to the network side device;
when the first reporting quantity comprises delay information and K1 > 1, sending the delay information of K1 delay paths to the network side device according to a first preset priority rule;
when the first reporting quantity comprises Doppler information and K2 = 1, sending the Doppler information of the strongest delay path to the network side device;
when the first reporting quantity comprises Doppler information and K2 > 1, sending the Doppler information of K2 delay paths to the network side device according to a second preset priority rule.

10. The method according to claim 3, wherein

when the preset candidate configuration parameter comprises a Precoding Matrix Indicator (PMI), and the number M of frequency-domain basis vectors in the PMI is less than K1, first M pieces of delay information in the K1 pieces of delay information are non-zero, and $(M+1)^{th}$ delay information to $K1^{th}$ delay information are zero;
when the preset candidate configuration parameter comprises the PMI, and the number M of frequency-domain basis vectors in the PMI is less than K2, first M pieces of Doppler information in the K2 pieces of Doppler information are non-zero, and $(M+1)^{th}$ Doppler information to $K2^{th}$ Doppler information are zero.

11. The method according to claim 1, wherein when the first reporting quantity comprises the Doppler information, the Doppler information comprises at least one of the followings:

first Doppler information, wherein the first Doppler information is Doppler frequency shift;
second Doppler information, wherein the second Doppler information represents a first Doppler variation caused by acceleration of relative motion between the terminal and the network side device; or
third Doppler information, wherein the third Doppler information represents a second Doppler variation between a current report and a previous report.

12. The method according to claim 11, wherein when the first reporting quantity comprises the second Doppler information, the first CSI reporting setting information further comprises a first threshold value;
before sending the CSI to the network side device, the method further comprises:

when the first Doppler variation in a measurement result obtained by measuring the received first CSI-RS is less than the first threshold value, setting as null a field corresponding to the second Doppler information in the CSI to be sent;
when the first Doppler variation in the measurement result obtained by measuring the received first CSI-RS is greater than or equal to the first threshold value, setting as the first Doppler variation the field corresponding to the second Doppler information in the CSI to be sent.

13. The method according to claim 11, wherein when the first reporting quantity comprises the third Doppler information, the first CSI reporting setting information further comprises a second threshold value;
before sending the CSI to the network side device, the method further comprises:

when the second Doppler variation in a measurement result obtained by measuring the received first CSI-RS is less than the second threshold value, setting as null a field corresponding to target Doppler information in the CSI to be sent;
when the second Doppler variation in the measurement result obtained by measuring the received first CSI-RS is greater than or equal to the second threshold value, setting as the target Doppler information the field corresponding to the target Doppler information in the CSI to be sent, wherein the target Doppler information is the first Doppler information, the second Doppler information, or the third Doppler information.

14. The method according to claim 1, wherein when the first reporting quantity comprises the Doppler information, and the Doppler information is Doppler frequency shift, the CSI comprises the Doppler frequency shift corresponding to a first delay path and a Doppler frequency shift difference between each of the delay paths in subsequent K2-1 delay paths and the first delay path;
when the first reporting quantity comprises delay information, and the delay information is an absolute delay value of the delay path, the CSI comprises the absolute delay value of the first delay path and a difference between the absolute delay value of each of the delay paths in the subsequent K1-1 delay paths and the absolute delay value of the first delay path.

15. An information transmission method, performed by a network side device, comprising:

sending at least one Channel State Information (CSI) resource setting information to a terminal, wherein the at least one CSI resource setting information comprises first CSI resource setting information, the first CSI resource setting information comprises configuration information of a first CSI-Reference Signal (CSI-RS) used for time-frequency tracking;
sending at least one CSI reporting setting information to the terminal, wherein the at least one CSI reporting setting information comprises first CSI reporting setting information, the first CSI reporting setting information is used to indicate a first reporting quantity in CSI reported by the terminal, and the first reporting quantity comprises delay information and/or Doppler information.

16. The method according to claim 15, wherein the first CSI resource setting information comprises S resource sets, each of the resource sets comprises Y pieces of configuration information of the first CSI-RS, where S is a positive integer greater than or equal to 1, and Y is a positive integer greater than or equal to 1;
the first CSI resource setting information is associated with the first CSI reporting setting information.

17. The method according to claim 15, wherein the first CSI resource setting information further comprises configuration information of a second CSI-RS used for channel measurement;

wherein the first CSI resource setting information is associated with the first CSI reporting setting information, and the first reporting quantity further comprises a preset candidate configuration parameter; or

the at least one CSI reporting setting information further comprises second CSI reporting setting information, the first CSI resource setting information is associated with the first CSI reporting setting information and the second CSI reporting setting information, the second CSI reporting setting information is used to indicate a second reporting quantity in the CSI reported by the terminal, and the second reporting quantity comprises a preset candidate configuration parameter.

18. The method according to claim 17, wherein the first CSI resource setting information comprises P resource sets, each of the resource sets comprises X pieces of configuration information of the second CSI-RS and Z pieces of configuration information of the first CSI-RS, where P, X, and Z are each a positive integer greater than or equal to 1; or

the first CSI resource setting information comprises Q resource sets, wherein each of Q1 resource sets comprises E pieces of configuration information of the second CSI-RS, and each of Q2 resource sets comprises F pieces of configuration information of the first CSI-RS, where Q is a positive integer greater than or equal to 2, Q = Q1 + Q2, where Q1, Q2, E, and F are each a positive integer greater than or equal to 1.

19. The method according to claim 18, wherein in the case that the first CSI resource setting information comprises Q resource sets, the method further comprises:
sending first pairing signaling to the terminal, the first pairing signaling is used to indicate two associated paired resource sets, wherein a first one of the associated paired resource sets is indicated to be used for the channel measurement, and a second one of the associated paired resource sets is indicated to be used for the time-frequency tracking.

20. The method according to claim 15, wherein the at least one CSI resource setting information further comprises second CSI resource setting information, and the second CSI resource setting information comprises configuration information of the second CSI-RS used for channel measurement;

wherein the second CSI resource setting information and the first CSI resource setting information are associated with the first CSI reporting setting information, and the first reporting quantity further comprises a preset candidate configuration parameter; or

the at least one CSI reporting setting information further comprises second CSI reporting setting information, the second CSI resource setting information is associated with the second CSI reporting setting information, the first CSI resource setting information is associated with the first CSI reporting setting information, and the second CSI reporting setting information comprises the second reporting quantity used for instructing the terminal to report the CSI, and the second reporting quantity comprises the preset candidate configuration parameter.

21. The method according to claim 20, wherein the method further comprises:
sending second pairing signaling to the terminal, wherein the second pairing signaling is used to indicate two associated paired resource sets, the two associated paired resource sets are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.

22. A terminal, comprising a memory, a transceiver, and a processor; wherein the memory is configured to store a computer program; the transceiver is configured to receive and send data under the control of the processor; the processor is configured to read the computer program in the memory to:

receive at least one Channel State Information (CSI) resource setting information and at least one CSI reporting setting information sent by a network side device, wherein the at least one CSI resource setting information comprises first CSI resource setting information, the first CSI resource setting information comprises configuration information of a first CSI-Reference Signal (CSI-RS) used for time-frequency tracking; the at least one CSI reporting setting information comprises first CSI reporting setting information, the first CSI reporting setting information is used to indicate a first reporting quantity in CSI reported by the terminal, the first reporting quantity comprises delay information and/or Doppler information;
receive the first CSI-RS based on the first CSI resource setting information;

send the CSI to the network side device based on the first CSI reporting setting information, wherein the CSI comprises K1 pieces of delay information and/or K2 pieces of Doppler information, where K1 and K2 are each a positive integer greater than or equal to 1.

23. The terminal according to claim 22, wherein the first CSI resource setting information comprises S resource sets, each of the resource sets comprises Y pieces of configuration information of the first CSI-RS, where S is a positive integer greater than or equal to 1, and Y is a positive integer greater than or equal to 1;
the first CSI resource setting information is associated with the first CSI reporting setting information.

24. The terminal according to claim 22, wherein the first CSI resource setting information further comprises configuration information of a second CSI-RS used for channel measurement;

wherein the first CSI resource setting information is associated with the first CSI reporting setting information, and the first reporting quantity further comprises a preset candidate configuration parameter; or
the at least one CSI reporting setting information further comprises second CSI reporting setting information, the first CSI resource setting information is associated with the first CSI reporting setting information and the second CSI reporting setting information, the second CSI reporting setting information is used to indicate a second reporting quantity in the CSI reported by the terminal, and the second reporting quantity comprises the preset candidate configuration parameter.

25. The terminal according to claim 24, wherein the first CSI resource setting information comprises P resource sets, each of the resource sets comprises X pieces of configuration information of the second CSI-RS and Z pieces of configuration information of the first CSI-RS, where P, X, and Z are each a positive integer greater than or equal to 1; or
the first CSI resource setting information comprises Q resource sets, wherein each of Q1 resource sets comprises E pieces of configuration information of the second CSI-RS, and each of Q2 resource sets comprises F pieces of configuration information of the first CSI-RS, where Q is a positive integer greater than or equal to 2, Q = Q1 + Q2, where Q1, Q2, E, and F are each a positive integer greater than or equal to 1.

26. The terminal according to claim 25, wherein the transceiver is further configured to:
receive first pairing signaling sent by the network side device in the case that the first CSI resource setting information comprises Q resource sets, the first pairing signaling is used to indicate two associated paired resource sets, wherein a first one of the associated paired resource sets is indicated to be used for the channel measurement, and a second one of the associated paired resource sets is indicated to be used for the time-frequency tracking.

27. The terminal according to claim 22, wherein the at least one CSI resource setting information further comprises second CSI resource setting information, and the second CSI resource setting information comprises configuration information of the second CSI-RS used for channel measurement;

wherein the second CSI resource setting information and the first CSI resource setting information are associated with the first CSI reporting setting information, and the first reporting quantity further comprises a preset candidate configuration parameter; or
the at least one CSI reporting setting information further comprises second CSI reporting setting information, the second CSI resource setting information is associated with the second CSI reporting setting information, the first CSI resource setting information is associated with the first CSI reporting setting information, and the second CSI reporting setting information comprises the second reporting quantity used for instructing the terminal to report the CSI, and the second reporting quantity comprises the preset candidate configuration parameter.

28. The terminal according to claim 27, wherein the transceiver is further configured to:
receive second pairing signaling sent by the network side device, wherein the second pairing signaling is used to indicate two associated paired resource sets that are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.

29. The terminal according to claim 22, wherein the transceiver is further configured to:

send K1 pieces of quantized delay information to the network side device through a preset first quantization mode;

and/or
send K2 pieces of quantized Doppler information to the network side device through a preset second quantization mode.

30. The terminal according to claim 22, wherein the transceiver is further configured to:

when the first reporting quantity comprises delay information and K1=1, send the delay information of a strongest delay path to the network side device;
when the first reporting quantity comprises delay information and K1 > 1, send the delay information of K1 delay paths to the network side device according to a first preset priority rule;
when the first reporting quantity comprises Doppler information and K2 = 1, send the Doppler information of the strongest delay path to the network side device;
when the first reporting quantity comprises Doppler information and K2 > 1, send the Doppler information of K2 delay paths to the network side device according to a second preset priority rule.

31. The terminal according to claim 24, wherein when the preset candidate configuration parameter comprises a Precoding Matrix Indicator (PMI), and the number M of frequency-domain basis vectors in the PMI is less than K1, first M pieces of delay information in the K1 pieces of delay information are non-zero, and $(M+1)^{th}$ delay information to $K1^{th}$ delay information are zero;
when the preset candidate configuration parameter comprises the PMI, and the number M of frequency-domain basis vectors in the PMI is less than K2, first M pieces of Doppler information in the K2 pieces of Doppler information are non-zero, and $(M+1)^{th}$ Doppler information to $K2^{th}$ Doppler information are zero.

32. The terminal according to claim 22, wherein when the first reporting quantity comprises the Doppler information, the Doppler information comprises at least one of the followings:

first Doppler information, wherein the first Doppler information is Doppler frequency shift;
second Doppler information, wherein the second Doppler information represents a first Doppler variation caused by acceleration of relative motion between the terminal and the network side device; or
third Doppler information, wherein the third Doppler information represents a second Doppler variation between a current report and a previous report.

33. The terminal according to claim 32, wherein when the first reporting quantity comprises the second Doppler information, the first CSI reporting setting information further comprises a first threshold value;
the processor is further configured to:

when the first Doppler variation in a measurement result obtained by measuring the received first CSI-RS is less than the first threshold value, set as null a field corresponding to the second Doppler information in the CSI to be sent;
when the first Doppler variation in the measurement result obtained by measuring the received first CSI-RS is greater than or equal to the first threshold value, set as the first Doppler variation the field corresponding to the second Doppler information in the CSI to be sent.

34. The terminal according to claim 32, wherein when the first reporting quantity comprises the third Doppler information, the first CSI reporting setting information further comprises a second threshold value;
the processor is further configured to:

when the second Doppler variation in a measurement result obtained by measuring the received first CSI-RS is less than the second threshold value, set as null a field corresponding to target Doppler information in the CSI to be sent;
when the second Doppler variation in the measurement result obtained by measuring the received first CSI-RS is greater than or equal to the second threshold value, set as the target Doppler information the field corresponding to the target Doppler information in the CSI to be sent, wherein the target Doppler information is the first Doppler information, the second Doppler information, or the third Doppler information.

35. The terminal according to claim 22, wherein when the first reporting quantity comprises the Doppler information, and the Doppler information is Doppler frequency shift, the CSI comprises the Doppler frequency shift corresponding to a first delay path and a Doppler frequency shift difference between each of the delay paths in subsequent K2-1 delay paths and the first delay path;

when the first reporting quantity comprises delay information and the delay information is an absolute delay value of the delay path, the CSI comprises the absolute delay value of the first delay path and a difference between the absolute delay value of each of the delay paths in the subsequent K1-1 delay paths and the absolute delay value of the first delay path.

36. An information transmission apparatus, comprising:

a first receiving unit, configured to receive at least one Channel State Information (CSI) resource setting information and at least one CSI reporting setting information sent by a network side device, wherein the at least one CSI resource setting information comprises first CSI resource setting information, the first CSI resource setting information comprises configuration information of a first CSI-Reference Signal (CSI-RS) used for time-frequency tracking; the at least one CSI reporting setting information comprises first CSI reporting setting information, the first CSI reporting setting information is used to indicate a first reporting quantity in CSI reported by the terminal, the first reporting quantity comprises delay information and/or Doppler information;

a second receiving unit, configured to receive the first CSI-RS based on the first CSI resource setting information;

a first sending unit, configured to send the CSI to the network side device based on the first CSI reporting setting information, wherein the CSI comprises K1 pieces of delay information and/or K2 pieces of Doppler information, where K1 and K2 are each a positive integer greater than or equal to 1.

37. The apparatus according to claim 36, wherein the first CSI resource setting information comprises S resource sets, each of the resource sets comprises Y pieces of configuration information of the first CSI-RS, where S is a positive integer greater than or equal to 1, and Y is a positive integer greater than or equal to 1;

the first CSI resource setting information is associated with the first CSI reporting setting information.

38. The apparatus according to claim 36, wherein the first CSI resource setting information further comprises configuration information of a second CSI-RS used for channel measurement;

wherein the first CSI resource setting information is associated with the first CSI reporting setting information, and the first reporting quantity further comprises a preset candidate configuration parameter; or

the at least one CSI reporting setting information further comprises second CSI reporting setting information, the first CSI resource setting information is associated with the first CSI reporting setting information and the second CSI reporting setting information, the second CSI reporting setting information is used to indicate a second reporting quantity in the CSI reported by the terminal, and the second reporting quantity comprises the preset candidate configuration parameter.

39. The apparatus according to claim 38, wherein the first CSI resource setting information comprises P resource sets, each of the resource sets comprises X pieces of configuration information of the second CSI-RS and Z pieces of configuration information of the first CSI-RS, where P, X, and Z are each a positive integer greater than or equal to 1; or

the first CSI resource setting information comprises Q resource sets, wherein each of Q1 resource sets comprises E pieces of configuration information of the second CSI-RS, and each of Q2 resource sets comprises F pieces of configuration information of the first CSI-RS, where Q is a positive integer greater than or equal to 2, Q = Q1 + Q2, where Q1, Q2, E, and F are each a positive integer greater than or equal to 1.

40. The apparatus according to claim 39, wherein in the case that the first CSI resource setting information comprises Q resource sets, the apparatus further comprises:

a third receiving unit, configured to receive first pairing signaling sent by the network side device, the first pairing signaling is used to indicate two associated paired resource sets, wherein a first one of the associated paired resource sets is indicated to be used for the channel measurement, and a second one of the associated paired resource sets is indicated to be used for the time-frequency tracking.

41. The apparatus according to claim 36, wherein the at least one CSI resource setting information further comprises second CSI resource setting information, and the second CSI resource setting information comprises configuration information of the second CSI-RS used for channel measurement;

wherein the second CSI resource setting information and the first CSI resource setting information are associated with the first CSI reporting setting information, and the first reporting quantity further comprises a preset candidate configuration parameter; or

the at least one CSI reporting setting information further comprises second CSI reporting setting information, the second CSI resource setting information is associated with the second CSI reporting setting information, the first CSI resource setting information is associated with the first CSI reporting setting information, and the second CSI reporting setting information comprises the second reporting quantity used for instructing the terminal to report the CSI, and the second reporting quantity comprises the preset candidate configuration parameter.

42. The apparatus according to claim 41, further comprising:
a fourth receiving unit, configured to receive second pairing signaling sent by the network side device, wherein the second pairing signaling is used to indicate two associated paired resource sets, the two associated paired resource sets are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.

43. The apparatus according to claim 36, wherein the first sending unit is configured for at least one of the followings:

sending K1 pieces of quantized delay information to the network side device through a preset first quantization mode; or
sending K2 pieces of quantized Doppler information to the network side device through a preset second quantization mode.

44. The apparatus according to claim 36, wherein the first sending unit is configured to:

when the first reporting quantity comprises delay information and K1=1, send the delay information of a strongest delay path to the network side device;
when the first reporting quantity comprises delay information and K1 > 1, send the delay information of K1 delay paths to the network side device according to a first preset priority rule;
when the first reporting quantity comprises Doppler information and K2 = 1, send the Doppler information of the strongest delay path to the network side device;
when the first reporting quantity comprises Doppler information and K2 > 1, send the Doppler information of K2 delay paths to the network side device according to a second preset priority rule.

45. The apparatus according to claim 38, wherein when the preset candidate configuration parameter comprises a Precoding Matrix Indicator (PMI), and the number M of frequency-domain basis vectors in the PMI is less than K1, first M pieces of delay information in the K1 pieces of delay information are non-zero, and $(M+1)^{th}$ delay information to $K1^{th}$ delay information are zero;
when the preset candidate configuration parameter comprises the PMI, and the number M of frequency-domain basis vectors in the PMI is less than K2, first M pieces of Doppler information in the K2 pieces of Doppler information are non-zero, and $(M+1)^{th}$ Doppler information to $K2^{th}$ Doppler information are zero.

46. The apparatus according to claim 36, wherein when the first reporting quantity comprises the Doppler information, the Doppler information comprises at least one of the followings:

first Doppler information, wherein the first Doppler information is Doppler frequency shift;
second Doppler information, wherein the second Doppler information represents a first Doppler variation caused by acceleration of relative motion between the terminal and the network side device; or
third Doppler information, wherein the third Doppler information represents a second Doppler variation between a current report and a previous report.

47. The apparatus according to claim 46, wherein when the first reporting quantity comprises the second Doppler information, the first CSI reporting setting information further comprises a first threshold value; the apparatus further comprises:

a first processing unit, configured to set as null a field corresponding to the second Doppler information in the CSI to be sent in the case that the first Doppler variation in a measurement result obtained by measuring the received first CSI-RS is less than the first threshold value;
a second processing unit, configured to set as the first Doppler variation the field corresponding to the second Doppler information in the CSI to be sent in the case that the first Doppler variation in the measurement result obtained by measuring the received first CSI-RS is greater than or equal to the first threshold value.

48. The apparatus according to claim 46, wherein when the first reporting quantity comprises the third Doppler information, the first CSI reporting setting information further comprises a second threshold value; the apparatus further comprises:

a third processing unit, configured to set as null a field corresponding to target Doppler information in the CSI to be sent in the case that the second Doppler variation in a measurement result obtained by measuring the received first CSI-RS is less than the second threshold value;

a fourth processing unit, configured to set as the target Doppler information the field corresponding to the target Doppler information in the CSI to be sent in the case that the second Doppler variation in a measurement result obtained by measuring the received first CSI-RS is greater than or equal to the second threshold value, wherein the target Doppler information is the first Doppler information, the second Doppler information, or the third Doppler information.

49. The apparatus according to claim 36, when the first reporting quantity comprises the Doppler information, and the Doppler information is Doppler frequency shift, the CSI comprises the Doppler frequency shift corresponding to a first delay path and a Doppler frequency shift difference between each of the delay paths in subsequent K2-1 delay paths and the first delay path;

when the first reporting quantity comprises delay information and the delay information is an absolute delay value of the delay path, the CSI comprises the absolute delay value of the first delay path and a difference between the absolute delay value of each of the delay paths in the subsequent K1-1 delay paths and the absolute delay value of the first delay path.

50. A network side device, comprising a memory, a transceiver, and a processor; wherein the memory is configured to store a computer program; the transceiver is configured to receive and send data under the control of the processor; the processor is configured to read the computer program in the memory to:

send at least one Channel State Information (CSI) resource setting information to a terminal, wherein the at least one CSI resource setting information comprises first CSI resource setting information, the first CSI resource setting information comprises configuration information of a first CSI-Reference Signal (CSI-RS) used for time-frequency tracking;

send at least one CSI reporting setting information to the terminal, wherein the at least one CSI reporting setting information comprises first CSI reporting setting information, the first CSI reporting setting information is used to indicate a first reporting quantity in CSI reported by the terminal, and the first reporting quantity comprises delay information and/or Doppler information.

51. The network side device according to claim 50, wherein the first CSI resource setting information comprises S resource sets, each of the resource sets comprises Y pieces of configuration information of the first CSI-RS, where S is a positive integer greater than or equal to 1, and Y is a positive integer greater than or equal to 1;

the first CSI resource setting information is associated with the first CSI reporting setting information.

52. The network side device according to claim 50, wherein the first CSI resource setting information further comprises configuration information of a second CSI-RS used for channel measurement;

the first CSI resource setting information is associated with the first CSI reporting setting information, and the first reporting quantity further comprises a preset candidate configuration parameter; or

the at least one CSI reporting setting information further comprises second CSI reporting setting information, and the first CSI resource setting information is associated with the first CSI reporting setting information and the second CSI reporting setting information, the second CSI reporting setting information is used to indicate a second reporting quantity in the CSI reported by the terminal, and the second reporting quantity comprises the preset candidate configuration parameter.

53. The network side device according to claim 52, wherein the first CSI resource setting information comprises P resource sets, each of the resource sets comprises X pieces of configuration information of the second CSI-RS and Z pieces of configuration information of the first CSI-RS, where P, X, and Z are each a positive integer greater than or equal to 1; or

the first CSI resource setting information comprises Q resource sets, wherein each of the Q1 resource sets comprises E pieces of configuration information of the second CSI-RS, and each of the Q2 resource sets comprises F pieces of configuration information of the first CSI-RS, where Q is a positive integer greater than or equal to 2, Q = Q1 + Q2, where Q1, Q2, E, and F are each a positive integer greater than or equal to 1.

54. The network side device according to claim 53, wherein the transceiver is further configured to:
in the case that the first CSI resource setting information comprises Q resource sets, send first pairing signaling to the terminal, the first pairing signaling is used to indicate two associated paired resource sets, wherein a first one of the associated paired resource sets is indicated to be used for the channel measurement, and a second one of the associated paired resource sets is indicated to be used for the time-frequency tracking.

55. The network side device according to claim 50, wherein the at least one CSI resource setting information further comprises second CSI resource setting information, the second CSI resource setting information comprises configuration information of the second CSI-RS used for channel measurement;

wherein the second CSI resource setting information and the first CSI resource setting information are associated with the first CSI reporting setting information, and the first reporting quantity further comprises a preset candidate configuration parameter; or
the at least one CSI reporting setting information further comprises second CSI reporting setting information, and the second CSI resource setting information is associated with the second CSI reporting setting information, the first CSI resource setting information is associated with the first CSI reporting setting information, the second CSI reporting setting information comprises a second reporting quantity used for instructing the terminal to report CSI, and the second reporting quantity comprises the preset candidate configuration parameter.

56. The network side device according to claim 55, wherein the transceiver is further configured to:
send second pairing signaling to the terminal, wherein the second pairing signaling is used to indicate two associated paired resource sets that are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.

57. An information transmission apparatus, comprising:

a second sending unit, configured to send at least one Channel State Information (CSI) resource setting information to a terminal, wherein the at least one CSI resource setting information comprises first CSI resource setting information, the first CSI resource setting information comprises configuration information of a first CSI-Reference Signal (CSI-RS) used for time-frequency tracking;
a third sending unit, configured to send at least one CSI reporting setting information to the terminal, wherein the at least one CSI reporting setting information comprises first CSI reporting setting information, the first CSI reporting setting information is used to indicate a first reporting quantity in CSI reported by the terminal, and the first reporting quantity comprises delay information and/or Doppler information.

58. The apparatus according to claim 57, wherein the first CSI resource setting information comprises S resource sets, each of the resource sets comprises Y pieces of configuration information of the first CSI-RS, where S is a positive integer greater than or equal to 1, and Y is a positive integer greater than or equal to 1;
the first CSI resource setting information is associated with the first CSI reporting setting information.

59. The apparatus according to claim 57, wherein the first CSI resource setting information further comprises configuration information of a second CSI-RS used for channel measurement;

the first CSI resource setting information is associated with the first CSI reporting setting information, and the first reporting quantity further comprises a preset candidate configuration parameter; or
the at least one CSI reporting setting information further comprises second CSI reporting setting information, and the first CSI resource setting information is associated with the first CSI reporting setting information and the second CSI reporting setting information, the second CSI reporting setting information is used to indicate a second reporting quantity in the CSI reported by the terminal, and the second reporting quantity comprises the preset candidate configuration parameter.

60. The apparatus according to claim 59, wherein the first CSI resource setting information comprises P resource sets, each of the resource sets comprises X pieces of configuration information of the second CSI-RS and Z pieces of configuration information of the first CSI-RS, where P, X, and Z are each a positive integer greater than or equal to 1; or

the first CSI resource setting information comprises Q resource sets, wherein each of the Q1 resource sets comprises E pieces of configuration information of the second CSI-RS, and each of the Q2 resource sets comprises F pieces of configuration information of the first CSI-RS, where Q is a positive integer greater than or equal to 2, Q = Q1 + Q2, where Q1, Q2, E, and F are each a positive integer greater than or equal to 1.

61. The apparatus according to claim 60, wherein in the case that the first CSI resource setting information comprises Q resource sets, the apparatus further comprises:
a fourth sending unit, configured to send first pairing signaling to the terminal, the first pairing signaling is used to indicate two associated paired resource sets, wherein a first one of the associated paired resource sets is indicated to be used for the channel measurement, and a second one of the associated paired resource sets is indicated to be used for the time-frequency tracking.

62. The apparatus according to claim 57, wherein the at least one CSI resource setting information further comprises second CSI resource setting information, the second CSI resource setting information comprises configuration information of the second CSI-RS used for channel measurement;

wherein the second CSI resource setting information and the first CSI resource setting information are associated with the first CSI reporting setting information, and the first reporting quantity further comprises a preset candidate configuration parameter; or
the at least one CSI reporting setting information further comprises second CSI reporting setting information, and the second CSI resource setting information is associated with the second CSI reporting setting information, the first CSI resource setting information is associated with the first CSI reporting setting information, the second CSI reporting setting information comprises a second reporting quantity used for instructing the terminal to report CSI, and the second reporting quantity comprises the preset candidate configuration parameter.

63. The apparatus according to claim 62, wherein the apparatus further comprises:
a fifth sending unit, configured to send second pairing signaling to the terminal, wherein the second pairing signaling is used to indicate two associated paired resource sets that are in the second CSI resource setting information and the first CSI resource setting information respectively, wherein a first one of the two associated paired resource sets is indicated to be used for the channel measurement, and a second one of the two associated paired resource sets is indicated to be used for time-frequency tracking.

64. A processor-readable storage medium storing a computer program, wherein the computer program is used to cause a processor to implement the information transmission method according to any one of claims 1 to 14, or the information transmission method according to any one of claims 15 to 21.

| Reporting setting 0 |

| Reporting setting 1 |

| Resource setting 0 (NZP CSI-RS) |

| Resource setting 1 (CSI-M) |

| Resource setting 2 (NZP CSI-RS) |

**Fig. 1**

Start

202

sending at least one CSI resource setting information to the terminal, the at least one CSI resource setting includes first CSI resource setting information, the first CSI resource setting information includes configuration information of a first CSI-RS used for time-frequency tracking

202

sending at least one CSI reporting setting information to the terminal, the at least one CSI reporting setting information includes first CSI reporting setting information, the first CSI reporting setting information is used to indicate a first reporting quantity in CSI reported by the terminal, the first reporting quantity includes delay information and/or Doppler information

**Fig. 2**

start

receiving at least one CSI resource setting information and at least one CSI reporting setting information sent by a network side device, wherein the at least one CSI resource setting information includes first CSI resource setting information, the first CSI resource setting information includes configuration information of a first CSI-RS used for time-frequency tracking; at least one CSI reporting setting information includes first CSI reporting setting information, the first CSI reporting setting information is used to indicate a first reporting quantity in CSI reported by the terminal, the first reporting quantity includes delay information and/or Doppler information — 301

receiving a first CSI-RS based on first CSI resource setting information — 302

sending CSI to the network side device based on the first CSI reporting setting information, the CSI including K1 pieces of delay information and/or K2 pieces of Doppler information, where K1 and K2 are each a positive integer greater than or equal to 1 — 303

end

**Fig. 3**

processor — 410

memory — 420

bus interface

transceiver — 400

user interface — 430

**Fig. 4**

first receiving unit — 501

second receiving unit — 502

first sending unit — 503

**Fig. 5**

610

processor

620

memory

bus interface

600

transceiver

**Fig. 6**

information transmission apparatus

second sending unit — 701

third sending unit — 702

**Fig. 7**

## INTERNATIONAL SEARCH REPORT

| | International application No. |
|---|---|
| | **PCT/CN2023/084839** |

### A. CLASSIFICATION OF SUBJECT MATTER

H04L5/00(2006.01)i

According to International Patent Classification (IPC) or to both national classification and IPC

### B. FIELDS SEARCHED

Minimum documentation searched (classification system followed by classification symbols)

H04L H04W G06F

Documentation searched other than minimum documentation to the extent that such documents are included in the fields searched

Electronic data base consulted during the international search (name of data base and, where practicable, search terms used)

3GPP, CNTXT, DWPI, ENTXTC, VEN, ENTXT, VCN: 多普勒, 发送, 上报, 上报量, 上传, 时延, 时延径, 延时, 上行链路, 跟踪参考信号, 频移, 信道状态信息, csi, doppler, reportquantity, rs, trs, uplink, tracking, reference, signal, frequency

### C. DOCUMENTS CONSIDERED TO BE RELEVANT

| Category* | Citation of document, with indication, where appropriate, of the relevant passages | Relevant to claim No. |
|---|---|---|
| X | WO 2022075695 A1 (LG ELECTRONICS INC.) 14 April 2022 (2022-04-14) description, paragraphs 7-27 and 562-581 | 1-64 |
| X | WO 2022016303 A1 (QUALCOMM INC. et al.) 27 January 2022 (2022-01-27) description, paragraphs 5-7, 62-65 and 107-136 | 1-64 |
| A | US 2022060221 A1 (LG ELECTRONICS INC.) 24 February 2022 (2022-02-24) entire document | 1-64 |
| A | CN 113840324 A (HUAWEI TECHNOLOGIES CO., LTD.) 24 December 2021 (2021-12-24) entire document | 1-64 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 June 2023** | **05 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/084839**

| Patent document cited in search report | | | Publication date (day/month/year) | Patent family member(s) | | | Publication date (day/month/year) |
|---|---|---|---|---|---|---|---|
| WO | 2022075695 | A1 | 14 April 2022 | None | | | |
| WO | 2022016303 | A1 | 27 January 2022 | EP | 4183082 | A1 | 24 May 2023 |
| | | | | US | 2023179370 | A1 | 08 June 2023 |
| | | | | IN | 202247067690 | A | 09 December 2022 |
| US | 2022060221 | A1 | 24 February 2022 | WO | 2020067761 | A1 | 02 April 2020 |
| CN | 113840324 | A | 24 December 2021 | WO | 2021259180 | A1 | 30 December 2021 |

Form PCT/ISA/210 (patent family annex) (July 2022)

**EP 4 513 807 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210425886